# EUROPÄISCHE PATENTSCHRIFT

(11) **EP 2 390 657 B1**
(45) Veröffentlichungstag und Bekanntmachung des Hinweises auf die Patenterteilung: **27.07.2016**
(21) Anmeldenummer: 10164014.2
(22) Anmeldetag: 27.05.2010
(51) Int. Cl.: G01N 21/25, G01N 21/952

(54) **Verfahren zur optischen Qualitätskontrolle von extrudierten Polymersträngen**
Method for optical quality control of extruded polymer strands
Procédé de contrôle optique de la qualité de faisceaux polymères extrudés

(43) Veröffentlichungstag der Anmeldung: 30.11.2011
(73) Patentinhaber: DINOSCO PGMBH, 4730 Raeren (BE)
(72) Erfinder: Wilms, Georg Hans Joachim, 4730 Raeren (BE)
(74) Vertreter: Jostarndt, Hans-Dieter

(56) Entgegenhaltungen:
- WO-A1-2005/095930
- WO-A1-2010/044473
- US-A- 6 122 045

## Beschreibung

Die vorliegende Erfindung betrifft ein Verfahren zur optischen Qualitätskontrolle von extrudierten Polymersträngen, die zur Herstellung von Polymergranulat verwendet werden können, bei dem zumindest ein Teil mindestens eines Polymerstrangs optisch kontinuierlich durch mindestens eine Aufnahmeeinheit erfasst wird, wobei Bilddaten für mindestens ein Pixel gewonnen werden und mit mindestens einem Sollwert verglichen werden können.

Dünne extrudierte Polymerstränge werden insbesondere zum Beispiel zum Herstellen von Polymergranulat zerstückelt.

Das optische Erscheinungsbild des Polymergranulats ist dabei für den Käufer ein sehr wichtiges Kaufkriterium und kann regelmäßig zu Beanstandungen führen.

Die Qualitätssicherung des optischen Erscheinungsbilds des Polymergranulats ist im Allgemeinen jedoch unzureichend, da die Qualitätssicherung lediglich anhand von Stichproben des hergestellten Polymergranulats sichergestellt werden kann.

Bei den Stichproben wird bestenfalls jedoch nur ein kleiner Teil, zumeist bestenfalls nur ungefähr 1%, des hergestellten Polymergranulats einer Charge/Bestellung untersucht.

Beanstandungen des optischen Erscheinungsbilds des Polymergranulats kommen daher regelmäßig vor.

Es besteht demnach ein Bedarf an einem besseren Verfahren zur Qualitätssicherung des optischen Erscheinungsbilds eines Polymergranulats.

Aus dem Stand der Technik ist zum Beispiel aus DE 102004052508 bereits ein Verfahren zum Vermessen eines Profils und zur Überwachung seiner Oberfläche bekannt, bei dem ein erstes Untersystem mit mindestens einer Kameraeinrichtung und einer Lichtquelle, die bevorzugt ein Laser sein kann, auf der Oberfläche des Profils eine Lichtkante erzeugt, wobei die Kameraeinrichtung mit einem Winkel zur Senkrechten bezogen auf eine Achse, entlang der das Profil bewegt wird, angeordnet ist. Somit lassen sich die Bildpunkte der Lichtkante mittels Triangulation auswerten, um die Dimensionen des Profils zu bestimmen. Zudem umfasst ein zweites Untersystem eine zweite Kameraeinrichtung und eine zweite Lichtquelle, die bevorzugt eine Mehrzahl von LEDs einschließen kann, wobei ein Winkel zwischen der zweiten Kameraeinrichtung und den LEDs vorgesehen ist, sodass eine Aufnahme der Oberfläche des Profils nach dem Prinzip der Dunkelfeldtechnik ermöglich wird. Das zweite Untersystem erfasst dabei kontinuierlich jede Veränderung der Oberfläche, die zu einer Abweichung von einer ansonsten völlig glatten Oberfläche führt.

Dieses Verfahren erlaubt es jedoch nicht, mehrere Profile mit einer einzigen Vorrichtung zu vermessen und zu überwachen. Zudem erlaubt ein solches Verfahren es nicht, eine Qualitätssicherung des optischen Erscheinungsbilds eines Polymergranulats zufriedenstellend zu ermöglichen, da insbesondere zum Beispiel Einschlüsse im Material und/oder Verfärbungen des Materials und/oder andere Fehler, die nicht zur Abweichungen von einer ansonsten völlig glatten Oberfläche führen, nicht festgestellt werden können. Das Dokument WO-A-2005/095930 offenbart ein Verfahren und eine Vorrichtung zur optischen Qualitätskontrolle von extrudierten polymersträngen.

Aufgabe der Erfindung ist es demnach, gute und effiziente Qualitätskontrolle des optischen Erscheinungsbilds eines Polymergranulats zu ermöglichen und dabei insbesondere zum Beispiel auch Farbabweichungen des Materials und/oder Einschlüsse im Material und/oder Verfärbungen des Materials, insbesondere zum Beispiel durch Düsenreißer, Vergilbungen und/oder "Black-Spacks" (kleine schwarze Punkte an der Oberfläche des Materials oder im Material) festzustellen.

Erfindungsgemäß wird diese Aufgabe durch ein Verfahren mit den Merkmalen des unabhängigen Anspruches 1 gelöst. Die Aufgabe wird ferner durch eine Vorrichtung nach Anspruch 9 gelöst. Vorteilhafte Ausführungsformen des Verfahrens und der Vorrichtung ergeben sich aus den Unteransprüchen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Die vorliegende Erfindung betrifft ein Verfahren zur optischen Qualitätskontrolle von extrudierten Polymersträngen, die zur Herstellung von Polymergranulat verwendet werden können, bei dem zumindest ein Teil mindestens eines Polymerstrangs optisch kontinuierlich durch mindestens eine Aufnahmeeinheit erfasst wird, wobei Bilddaten für mindestens ein Pixel gewonnen werden und mit mindestens einem Sollwert verglichen werden können. Insbesondere können dabei zum Beispiel bevorzugt Bilddaten für mindestens ein Pixel gewonnen werden und ferner mindestens ein Farbwert für dieses Pixel mit mindestens einem Sollwert verglichen werden. Bevorzugt können dabei zum Beispiel Bilddaten und insbesondere mindestens ein Farbwert für mindestens ein Pixel gewonnen werden und ferner mindestens ein Farbwert für dieses Pixel mit mindestens einem Sollwerte insbesondere zum Beispiel mit mindestens einem Sollwert für den Farbwert verglichen werden. Dadurch kann Qualität des optischen Erscheinungsbilds von einem oder mehreren Polymersträngen kontrolliert werden, wobei zum Beispiel Farbabweichungen und/oder Verfärbungen und/oder Einschlüsse erkannt werden können, um Rückschlüsse bezüglich der Qualität des optischen Erscheinungsbilds des/der jeweiligen Polymerstrangs/Polymerstränge und des/der respektive daraus hergestellten Polymergranulats/Polymergranulate zu ermöglichen.

Dabei kann/können ein oder mehrere extrudierte(r) Polymerstrang (-stränge) kontinuierlich aus dem Extruder in ein Wasserbad und gegebenenfalls weiter in einen Zerkleinerer beziehungsweise Granulator gezogen werden.

In einer Ausführungsform des Verfahrens zur optischen Qualitätskontrolle von extrudierten Polymersträngen kann zum Beispiel zumindest ein Teil mindestens eines Polymerstrangs von mindestens einer Aufnahmeeinheit optisch erfasst werden.

Die Aufnahmeeinheit kann dabei in der Produktionslinie und insbesondere zum Beispiel zwischen dem Wasserbad und dem Zerkleinerer/Granulator beziehungsweise vor dem Zerkleinerer/Granulator angeordnet sein, sodass zumindest ein Teil mindestens eines Polymerstrangs in der Produktionslinie insbesondere zum Beispiel zwischen dem Wasserbad und dem Zerkleinerer/Granulator beziehungsweise vor dem Zerkleinerer/Granulator von mindestens einer Aufnahmeeinheit optisch erfasst werden kann.

In einer Ausführungsform des Verfahrens zur optischen Qualitätskontrolle von extrudierten Polymersträngen kann/können zum Beispiel mindeste ein Polymerstrang bevorzugt jedoch auch mehrere Polymerstränge durch mindestens eine Aufnahmeeinheit optisch erfasst werden. Sofern mehrere Polymerstränge von mindestens einer Aufnahmeeinheit optisch erfasst werden, kann die Qualitätskontrolle mehrerer Polymerstränge gleichzeitig erfolgen. Dadurch kann die Qualität des optischen Erscheinungsbilds mehrerer Polymerstränge gleichzeitig kontrolliert werden, wobei zum Beispiel Farbabweichungen und/oder Verfärbungen und/oder Einschlüsse erkannt werden können, um Rückschlüsse bezüglich der Qualität des optischen Erscheinungsbilds jedes Polymerstrangs und des respektive daraus hergestellten Polymergranulats zu ermöglichen.

In einer Ausführungsform des Verfahrens zur optischen Qualitätskontrolle von extrudierten Polymersträngen kann/können zum Beispiel mindestens eine bevorzugt jedoch auch mehrere Aufnahmeeinheiten zum optischen Erfassen mindestens eines Polymerstranges verwendet werden. Dabei kann bevorzugt die gesamte Oberfläche mindestens eines oder mehrerer Polymerstränge durch die Aufnahmeeinheit(en) optisch erfasst werden. Mehrere Aufnahmeeinheiten können dabei zum Beispiel dazu verwendet werden, um mindestens einen Polymerstrang aus mehreren Blickwinkeln optisch zu erfassen. Bevorzugt können dabei zum Beispiel insbesondere zwei beziehungsweise vier Aufnahmeeinheiten vorgesehen sein. In einer Ausführungsform des Verfahrens zur optischen Qualitätskontrolle von extrudierten Polymersträngen können zum Beispiel mindestens zwei Aufnahmeeinheiten bevorzugt zum Beispiel so angeordnet sein, dass mindestens ein Polymerstrang von mindestens einer Aufnahmeeinheit von oben und von mindestens einer weiteren Aufnahmeeinheit von unten optisch erfasst werden kann. In einer Ausführungsform des Verfahrens zur optischen Qualitätskontrolle von extrudierten Polymersträngen können zum Beispiel mindestens vier Aufnahmeeinheiten bevorzugt zum Beispiel so angeordnet sein, dass mindestens ein Polymerstrang von mindestens einer Aufnahmeeinheit von oben, von mindestens einer weiteren Aufnahmeeinheit von unten, von mindestens einer weiteren Aufnahmeeinheit von rechts und von mindestens einer weiteren Aufnahmeeinheit von links optisch erfasst werden kann. Durch die Verwendung von mehreren Aufnahmeeinheiten kann mindestens ein Polymerstrang besser beziehungsweise umfangreicher und insbesondere zum Beispiel aus mehreren unterschiedlichen Blickwinkeln optisch erfasst werden. Dadurch kann das Verfahren zur optischen Qualitätskontrolle verbessert werden, da das optische Erscheinungsbild aus mehreren unterschiedlichen Blickwinkeln bewertet werden kann und Farbabweichungen und/oder Einschlüsse und/oder Verfärbungen entdeckt werden können, die aus einem einzigen Blickwinkel gegebenenfalls nicht sichtbar sein könnten.

Optisch erfasst werden und/oder durch eine Aufnahmeeinheit optisch erfasst werden, kann dabei insbesondere zum Beispiel bedeuten, dass durch eine Aufnahmeeinheit Bilder aufgenommen werden können, um Bilddaten insbesondere zum Beispiel Bilddaten für mindestens einen Pixel und bevorzugt für mehrere Pixel zu gewinnen. Ein Satz von Bilddaten, die für ein oder mehrere Pixel gewonnen werden können, kann dabei zum Beilspiel gegebenenfalls einem Bild entsprechen. Bilddaten können dabei insbesondere zum Beispiel Farbwerte und/oder Grauwerte und/oder Helligkeitswerte und/oder errechnete/ermittelte Kontrastwerte umfassen.

In einer Ausführungsform des Verfahrens zur optischen Qualitätskontrolle von extrudierten Polymersträngen kann/können die Aufnahmeeinheit(en) bevorzugt zum Beispiel so angeordnet sein, dass zumindest ein Teil mindestens eines und bevorzugt jedes Polymerstrangs, der kontinuierlich aus dem Extruder in ein Wasserbad und in einen Zerkleinerer beziehungsweise Granulator gezogen wird, durch die Aufnahmeeinheit optisch erfasst werden kann. Dass zumindest ein Teil mindestens eines Polymerstrangs durch die Aufnahmeeinheit optisch erfasst werden kann, kann dabei insbesondere zum Beispiel bedeuten, dass zumindest ein Teil eines Polymerstrangs auf den gegebenenfalls durch mindestens eine Aufnahmeeinheit aufgenommen Bildern dargestellt sein kann beziehungsweise dass zumindest ein Teil eines Polymerstrangs anhand der von mindestens einer Aufnahmeeinheit gewonnen Bilddaten dargestellt werden kann.

Bei einem und bevorzugt bei jedem Teil eines Polymerstrang, der durch die Aufnahmeeinheit optisch erfasst werden kann, kann es sich bevorzugt um einen Teil eines Polymerstrangs handeln, welcher zum Beispiel die gesamte Breite eines Polymerstrangs umfasst jedoch der Länge nach lediglich einen Teil eines/jedes Polymerstrangs darstellt.

Kontinuierlich optisch erfassen kann dabei insbesondere zum Beispiel bedeuten, dass die durch mindestens eine Aufnahmeeinheit für mindestens ein Pixel und bevorzugt für mehrere Pixel gewonnen Bilddaten kontinuierlich gewonnen werden beziehungsweise, dass durch mindestens eine Aufnahmeeinheit kontinuierlich Bilder aufgenommen werden, die zumindest einen Teil mindestens eines Polymerstrangs darstellen, sodass bevorzugt die gesamte Oberfläche mindestens eines Polymerstrangs anhand der gewonnenen Bilddaten beziehungsweise der aufgenommenen Bilder insbesondere zum Beispiel der Lange nach möglichst lückenlos beziehungsweise als Ganzes beziehungsweise als nahezu endloser Strang, welcher alles Material umfasst, das in einem bestimmten Zeitintervall aus dem Extruder gekommen ist, dargestellt werden kann. Dies kann insbesondere möglich sein obwohl der Länge nach jeweils lediglich einen Teil eines/jedes Polymerstrangs durch mindestens eine Aufnahmeeinheit optisch erfasst werden kann. Durch eine kontinuierliche optische Erfassung durch mindestens eine Aufnahmeeinheit kann demnach bevorzugt die gesamte Oberfläche jedes Polymerstrangs durch mindestens eine Aufnahmeeinheit optisch erfasst werden. Durch eine kontinuierliche optische Erfassung durch mindestens eine Aufnahmeeinheit kann zudem bevorzugt die gesamte Oberfläche jedes Polymerstrangs auch dann durch mindestens eine Aufnahmeeinheit optisch erfasst werden, auch wenn die Aufnahmeeinheit(en) lediglich einen Teil mindestens eines und bevorzugt jedes Polymerstrangs optisch erfasst/erfassen. Dadurch kann auch die Qualitätskontrolle von extrudierten Polymersträngen bei einer kontinuierlichen Produktion der Polymerstränge kontinuierlich erfolgen. Des Weiteren kann bevorzugt die gesamte Oberfläche jedes herstellten Polymerstrangs überwacht und/oder kontrolliert werden. Die kontinuierlich optische Qualitätskontrolle von extrudierten Polymersträngen ist daher im Vergleich zur Begutachtung von Stichproben viel effizienter, da alles Material, welches in einem bestimmten Zeitintervall aus dem Extruder gekommen ist, optisch erfasst und bezüglich seines optischen Erscheinungsbilds bewertet werden kann.

In einer Ausführungsform des Verfahrens zur optischen Qualitätskontrolle von extrudierten Polymersträngen können dabei zum Beispiel Bilddaten für mindestens ein Pixel und bevorzugt für mehrere Pixel kontinuierlich gewonnen werden, wobei dazu zum Beispiel durch mindestens eine Aufnahmeeinheit kontinuierlich Bilder aufgenommen werden können, sodass die einzelnen gewonnen Bilddaten beziehungsweise die einzelnen aufgenommen Bilder mindestens eines Teils mindestens eines durch mindestens eine Aufnahmeeinheit optisch erfassten extrudierten Polymerstrangs zumindest teilweise überlappende Bereiche aufweisen. Dies kann zum Beispiel insbesondere dann sinnvoll sein, wenn eine große Abzugsgeschwindigkeit für mindestens einen Polymerstrang vorgesehen ist, da insbesondere zum Beispiel am/beim Übergang zwischen den einzelnen Bildern, die durch mindestens eine Aufnahmeeinheit gegebenenfalls aufgenommen werden können, Bilddaten verloren werden können, insbesondere wenn der Übergang nicht vollkommen nahtlos erfolgt. Dabei kann es gegebenenfalls besonders bei einer hohen Abzugsgeschwindigkeit schwierig sein, einen nahtlosen Übergang zwischen einzelnen Bildern, die gegebenenfalls durch mindestens eine Aufnahmeeinheit aufgenommen werden können, sicherzustellen. Durch die Überlappung der Bilder beziehungsweise Bilddaten kann sichergestellt werden, das auch bei großen Abzugsgeschwindigkeiten, mindestens ein Polymerstrang kontinuierlich sowie bevorzugt möglichst lückenlos optisch erfasst und anhand der gewonnenen Bilddaten beziehungsweise der aufgenommenen Bilder insbesondere zum Beispiel der Länge nach möglichst lückenlos beziehungsweise als Ganzes beziehungsweise als nahezu endloser Strang, welcher alles Material umfasst, das in einem bestimmten Zeitintervall aus dem Extruder gekommen ist, dargestellt/ überwacht werden kann, obwohl der Länge nach jeweils lediglich einen Teil eines/jedes Polymerstrangs durch mindestens eine Aufnahmeeinheit optisch erfasst werden kann. Bilddaten/Bilder mit überlappenden Bereichen können demnach insbesondere bei einer große Abzugsgeschwindigkeit zum Beispiel sicherstellen, dass insbesondere zum Beispiel am/beim Übergang zwischen einem von der Aufnahmeeinheit aufgenommen Bild und dem nächsten keine Bilddaten verloren gehen. Auch bei der Verwendung einer Zeilenkamera, die jeweils lediglich Bilddaten für eine Pixelzeile gewinnt, können die Bilder/Bilddaten bevorzugt so schnell aufgenommen/gewonnen werden, dass die aufgenommen/ gewonnen Bilder/Bilddaten mindestens einen zumindest teilweise überlappenden Bereich aufweisen. Die überlappenden Bereiche können dabei zum Beispiel bevorzugt automatisch als solche erkannt und zusammengelegt werden, um mindestens einen Polymerstrang anhand der gewonnenen Bilddaten beziehungsweise der aufgenommenen Bilder insbesondere zum Beispiel der Länge nach möglichst lückenlos beziehungsweise als Ganzes beziehungsweise als nahezu endloser Strang, welcher alles Material umfasst, das in einem bestimmten Zeitintervall aus dem Extruder gekommen ist, dargestellt werden kann, obwohl der Länge nach jeweils lediglich ein Teil eines/jedes Polymerstrangs durch mindestens eine Aufnahmeeinheit optisch erfasst werden kann. Dadurch kann sichergestellt werden, dass ein Polymerstrang auch bei einer sehr hohen Abzugsgeschwindigkeit möglichst kontinuierlich und möglichst lückenlos optisch erfasst beziehungsweise kontrolliert werden kann.

In einer Ausführungsform des Verfahrens zur optischen Qualitätskontrolle von extrudierten Polymersträngen kann die Belichtungszeit der Aufnahmeeinheit zum Beispiel zwischen 1 Mikrosekunden und 2000 Mikrosekunden, weiter bevorzugt zwischen 5 Mikrosekunden und 1000 Millisekunden, weiter bevorzugt zwischen 10 Mikrosekunden und 500 Mikrosekunden, weiter bevorzugt zwischen 25 Mikrosekunden und 200 Mikrosekunden, weiter bevorzugt zwischen 50 Mikrosekunden und 150 Mikrosekunden, weiter bevorzugt zwischen 75 Mikrosekunden und 125 Mikrosekunden, weiter bevorzugt zwischen 85 Mikrosekunden und 120 Mikrosekunden, und besonders bevorzugt zwischen 90 Mikrosekunden und 115 Mikrosekunden betragen. Dadurch kann sichergestellt werden, dass mindestens eine Aufnahmeeinheit ausreichend Bilddaten gewinnt, damit ein Polymerstrang auch bei einer hohen Abzugsgeschwindigkeit, von zum Beispiel 1 m/s, bevorzugt 2 m/s und/oder mehr, möglichst kontinuierlich und möglichst lückenlos optisch erfasst beziehungsweise kontrolliert werden kann.

In einer Ausführungsform des Verfahrens zur optischen Qualitätskontrolle von extrudierten Polymersträngen kann zum Beispiel mindestens ein Sollwert für den Farbwert und/oder den Kontrastwert durch Eingabe und/oder Auswahl eines Wertes/Sollwertes und/oder durch Auswahl eines Bereiches vorgegeben werden, dessen Farbwert und/oder Kontrastwert, dem Sollwert entspricht. In einer Ausführungsform des Verfahrens zur optischen Qualitätskontrolle kann zum Beispiel mindestens ein Sollwert für den Farbwert durch Eingabe eines Wertes und/oder durch Auswahl eines Wertes anhand von mehreren vorgegebenen Farbwerten erfolgen. Die Farbwerte können dabei bevorzugt zum Beispiel anhand einer Farbskala vorgegeben werden. In einer Ausführungsform des Verfahrens zur optischen Qualitätskontrolle kann die Eingabe eines Wertes für mindestens einen Sollwert und/oder die Auswahl eines Wertes für den Sollwert anhand von mehreren vorgegebenen Farbwerten zum Beispiel an einem Kontrollterminal erfolgen. Ein Sollwert kann dabei im Sinne der vorliegenden Erfindung insbesondere zum Beispiel ein Sollwert für den Farbwert beziehungsweise den Grauwert und/oder den Kontrastwert darstellen. Sofern ein Farbwert mit einem Sollwert verglichen wird, kann der Sollwert besonders bevorzugt zum Beispiel ein Sollwert für den Farbwert sein. Sofern ein Kontrastwert mit einem Sollwert verglichen wird, kann der Sollwert besonders bevorzugt zum Beispiel ein Sollwert für den Kontrastwert sein. Der Sollwert kann dabei insbesondere einen Sollwert für den Farbwert beziehungsweise den Grauwert darstellen, welcher zum Beispiel der gewünschten Farbe eines hergestellten Polymerstrangs entsprechen beziehungsweise dieser Farbe zugeordnet werden kann. Dank einer Aufnahmeeinheit kann dabei mindestens ein Farbwert für mindestens ein Pixel gewonnen werden. Ein Farbwert, welcher mit mindestens einem Sollwert verglichen werden kann, kann dabei gegebenenfalls mehrere Farbwerte umfassen und/oder aus mehreren Farbwerten bestehen und/oder aus mehreren Farbwerten errechnet und/oder zusammengesetzt werden, die gegebenenfalls auch jeweils mit mindestens einem Sollwert für den Farbwert verglichen werden können. Wird ein farbiger Polymerstrang hergestellt und die Qualität des optischen Erscheinungsbilds dieses Polymerstrangs kontrolliert, kann bevorzugt zum Beispiel mindestens eine Farbkamera als Aufnahmeeinheit verwendet werden. Eine Farbkamera ermöglicht es dabei, zum Beispiel Bilddaten, welche gegebenenfalls mehr Informationen und/oder genauere Information zu Farbwerten umfassen können, für einen und/oder mehrere Pixel zu gewinnen. Ein farbiger Polymerstrang kann dabei insbesondere zum Beispiel jeder Polymerstrang sein, der nicht transparent ist. Wird ein transparenter und/oder transluzenter Polymerstrang hergestellt und die Qualität des optischen Erscheinungsbilds dieses Polymerstrangs kontrolliert, kann bevorzugt zum Beispiel mindestens eine Schwarz/Weiß-Kamera als Aufnahmeeinheit verwendet werden. Eine Schwarz/Weiß-Kamera ermöglicht es dabei, zum Beispiel Bilddaten und insbesondere mindestens einen und bevorzugt mehrere Farbwerte beziehungsweise Grauwerte für einen und/oder mehrere Pixel zu gewinnen, wobei durch eine Schwarz/Weiß-Kamera insbesondere zum Beispiel für transparente und/oder transluzente Polymerstränge Bilddaten mit mehr Grauwerten und/oder differenzierteren Grauwerten und/oder höheren Kontrastwerten gewonnen werden können. Bei der Verwendung einer Schwarz/Weiß-Kamera wird/werden bevorzugt mindestens ein und bevorzugt mehrere Grauwerte als Farbwert(e) gewonnen. Farbwerte und Grauwerte können daher insbesondere wenn eine Schwarz/Weiß-Kamera eingesetzt wird synonym verwendet werden. Dadurch kann die Auswertung der gewonnen Bilddaten bezüglich Farbabweichungen/Verfärbungen und/oder Einschlüsse insbesondere für transparente und/oder transluzente Polymerstränge gegebenenfalls verbessert werden. Ein Farbwert kann dabei insbesondere zum Beispiel eine Farbe, wie zum Beispiel Weiß, Schwarz, Grau, Blau, Gelb, Grün, Rot und/oder eine Nuance dieser Farben und/oder eine Mischung dieser Farben darstellen und/oder einer dieser Farben und/oder einer Nuance einer dieser Farben und/oder einer Mischung davon entsprechen beziehungsweise zugeordnet werden, wobei ein Farbwert insbesondere zum Beispiel zumindest ein Teil der Bilddaten darstellen kann, welcher mindestens eine dieser Farben und/oder eine Nuance dieser Farben und/oder eine Mischung davon repräsentiert und/oder mindestens einer dieser Farben und/oder einer Mischung davon zugeordnet werden kann. In einer Ausführungsform des Verfahrens zur optischen Qualitätskontrolle von extrudierten Polymersträngen können zum Beispiel mehrere Sollwerte verwendet werden. Dies kann insbesondere sinnvoll sein, wenn zum Beispiel die Qualität des optischen Erscheinungsbilds von mehreren Polymersträngen mit unterschiedlichen Farben gleichzeitig kontrolliert werden soll. Jeder Sollwert für den Farbwert kann dabei insbesondere einen Sollwert für den Farbwert darstellen, welcher jeweils zum Beispiel der gewünschten Farbe eines der hergestellten und kontrollierten Polymerstränge entsprechen beziehungsweise dieser Farbe zugeordnet werden kann. Dadurch kann Qualität des optischen Erscheinungsbilds von mehreren Polymersträngen mit unterschiedlichen Farben gleichzeitig kontrolliert werden, wobei zum Beispiel Farbabweichungen und/oder Verfärbungen und/oder Einschlüsse auch für mehrere Polymerstränge mit unterschiedlichen Farben gleichzeitig erkannt werden können.

In einer Ausführungsform des Verfahrens zur optischen Qualitätskontrolle von extrudierten Polymersträngen kann bezüglich jedes Sollwerts für den Färbwert und/oder den Kontrastwert eine gewisse Toleranz beziehungsweise ein gewisser Toleranzbereich frei gewählt werden. Dadurch können Farbwerte ermittelt werden, die mindestens einem Sollwert nicht genau entsprechen aber innerhalb der Toleranz beziehungsweise dem Toleranzbereich liegen und dem Sollwert daher ausreichend ähneln, sodass diese Farbwerte insbesondere zum Beispiel nicht als Farbabweichungen erkannt werden können und gegebenenfalls ebenfalls als Farbwerte gelten können die dem Sollwert entsprechen. Ein Farbwert, der einem Wert und insbesondere Sollwert ausreichend ähnelt, kann demnach insbesondere zum Beispiel ein Farbwert sein, welcher dem Wert und insbesondere dem Sollwert nicht genau entspricht aber innerhalb der Toleranz beziehungsweise des Toleranzbereichs liegt und dem Wert beziehungsweise dem Sollwert daher ausreichend ähnelt, wobei er im Vergleich zu diesem daher bevorzugt zum Beispiel lediglich einen geringen Kontrast aufweisen kann, sodass der Farbwert insbesondere zum Beispiel nicht als Farbabweichungen erkannt werden kann. Dadurch kann das Risiko von Fehlalarmen, die gegebenenfalls zum Beispiel schon bei sehr geringen Farbabweichungen auftreten könnten, bei der Qualitätskontrolle von extrudierten Polymersträngen reduziert werden.

In einer Ausführungsform des Verfahrens zur optischen Qualitätskontrolle von extrudierten Polymersträngen können Pixel, deren Farbwerte und/oder Helligkeitswerte einem bestimmten Wert entsprechen und/oder innerhalb einer frei wählbaren Toleranz beziehungsweise innerhalb eines frei wählbaren Toleranzbereichs ausreichend ähneln dem Hintergrund zugeordnet werden. Dabei kann alternativ auch mindestens ein frei wählbarer Grenzwert für den Farbwert definiert werden, sodass alle Pixel deren Farbwerte auf einer frei wählbaren Skala unter oder über einem frei wählbaren Grenzwert liegen dem Hintergrund zugeordnet werden. Solche Pixel, welche dem Hintergrund zugeordnet werden, können dann bei der optischen Qualitätskontrolle gegebenenfalls nicht länger berücksichtigt werden. Insbesondere kann für solche Pixel, welche dem Hintergrund zugeordnet werden, gegebenenfalls auf einen Abgleich der Bilddaten und insbesondere der gewonnenen Farbwerte mit einem Sollwert verzichtet werden. Ein Grenzwert kann dabei insbesondere zum Beispiel an einem Kontrollterminal eingegeben und/oder ausgewählt werden. Dadurch kann der Abgleich der Bilddaten und insbesondere der Farbwerte der Pixel mit dem/den Sollwert(en) besonders effizient gestaltet und gegebenenfalls beschleunigt werden.

In einer Ausführungsform des Verfahrens zur optischen Qualitätskontrolle von extrudierten Polymersträngen können Pixel, deren Farbwerte einem Sollwert entsprechen und/oder ausreichend ähneln, gezählt und/oder einem Polymerstrangs zugeordnet werden. Dadurch kann die Breite und/oder das Vorhandensein eines Polymerstrangs überwacht werden. Alternativ und/oder zusätzlich dazu können auch Pixel, deren Farbwerte nicht einem Sollwert entsprechen und/oder ausreichend ähneln, gezählt werden, um die Qualität des optischen Erscheinungsbilds mindestens eines Polymerstrangs zu kontrollieren. Sofern die Anzahl der Pixel, deren Farbwerte einem Sollwert entsprechen und/oder ausreichend ähneln, unter einem bestimmten frei wählbaren Grenzwert liegt, kann mindestens ein Alarmsignal und/oder mindestens ein Steuersignal generiert und/oder ausgesendet werden. In der Tat kann in diesem Fall zum Beispiel davon ausgegangen werden, dass die Breite des entsprechenden Stranges gegebenenfalls von einer Sollbreite abweicht und/oder dass die Produktion des entsprechenden Polymerstrangs unterbrochen wurde, weil der Strang zum Beispiel abgerissen ist. Ein Grenzwert kann dabei gegebenenfalls zum Beispiel der Sollbreite eines Polymerstrangs und/oder einer Mindestbreite eines Polymerstrangs und/oder einer Mindestmenge an Pixeln, die einem Polymerstrang zugeordnet werden können, und/oder einer Sollmenge an Pixeln, die einem Polymerstrang zugeordnet werden können, entsprechen. Sofern die Anzahl der Pixel, deren Farbwerte einem Sollwert entsprechen und/oder ausreichend ähneln, über einem bestimmten frei wählbaren Grenzwert liegt, kann ebenfalls mindestens ein Alarmsignal und/oder mindestens ein Steuersignal generiert und/oder ausgesendet werden, da die Breite eines entsprechenden Polymerstrangs in diesem Fall ebenfalls von einer Sollbreite abweichen kann. Ein Grenzwert kann dabei gegebenenfalls zum Beispiel der Sollbreite eines Polymerstrangs und/oder einer Sollmenge an Pixeln, die einem Polymerstrang zugeordnet werden können, entsprechen. Dadurch kann nicht nur die Qualität des optischen Erscheinungsbilds mindestens eines Polymerstrangs sondern auch die Breite eines Strangs und/oder die Kontinuität seiner Produktion kontrolliert werden.

In einer Ausführungsform des Verfahrens zur optischen Qualitätskontrolle von extrudierten Polymersträngen kann, insbesondere wenn zum Beispiel eine Flächenkamera (Matrixkamera) verwendet wird, gegebenenfalls eine Anzahl von Pixeln, deren Farbwerte mindestens einem Sollwert entsprechen und/oder ausreichend ähneln, gezählt werden, die der Breite einer Pixelgruppe, deren Farbwerte mindestens einem Sollwert entsprechen und/oder ausreichend ähneln, und damit auch der Breite mindestens eines erfassten Polymerstrangs entsprechen kann, da eine Pixelgruppe, deren Farbwerte einem Sollwert entspricht und/oder ausreichend ähnelt, einem Polymerstrang zugeordnet werden kann. Breite, Dicke und Durchmesser eines Polymerstrangs können dabei synonym verwendet werden. Die Breite einer Pixelgruppe, die der Breite und/oder dem Durchmesser mindestens eines erfassten Polymerstrangs entsprechen kann, kann dabei bevorzugt zum Beispiel kontinuierlich beziehungsweise in jeder Pixelzeile gemessen werden und gegebenenfalls zum Beispiel mit einer Sollbreite verglichen werden. Alternativ können gegebenenfalls auch die Ergebnisse von mehreren Messungen verglichen werden, um Variationen festzustellen. Die Sollbreite kann dabei bevorzugt zum Beispiel insbesondere ein eingegebener/ausgewählter Wert sein. Alternativ kann die Sollbreite gegebenenfalls zum Beispiel einem bei einer vorangegangenen Messung ermittelten Wert entsprechen und/oder einem Mittelwert von mehreren bei vorangegangenen Messungen ermittelten Werten entsprechen. Variationen der Breite einer Pixelgruppe, die einem Polymerstrang zugeordnet werden kann, können demnach erfasst und festgestellt werden. Diese Variationen entsprechen dabei Variationen der Breite des entsprechenden Polymerstrangs. Die Sollbreite einer solchen Pixelgruppe, die einem Polymerstrang zugeordnet werden kann, kann dabei der Sollbreite und/oder dem Solldurchmesser mindestens eines entsprechenden Polymerstrangs entsprechen. Sofern die Anzahl der Pixel, die der Breite einer Pixelgruppe, welche einem Polymerstrang zugeordnet werden kann, und/oder der Breite eines Polymerstrangs entsprechen kann, unter und/oder über einem frei wählbaren Grenzwert liegt, kann mindestens ein Alarmsignal und/oder mindestens ein Steuersignal generiert und/oder ausgesendet werden. Ein Grenzwert kann dabei gegebenenfalls zum Beispiel der Sollbreite eines Polymerstrangs entsprechen. Dadurch kann nicht nur die Qualität des optischen Erscheinungsbilds eines Polymerstrangs sondern auch die Breite eines produzierten Polymerstrangs kontinuierlich optisch kontrolliert werden.

Wenn mehrere Polymerstränge kontrolliert werden sollen, kann zum Beispiel für jeden Polymerstrang ein Sollwert für den Farbwert eingeben/ausgewählt werden, sodass Pixel, deren Farbwerte einem der Sollwerte entsprechen und/oder ausreichend ähneln und/oder gegebenenfalls zum Beispiel entsprechend einem der Polymerstränge zugeordnet werden können. Dies kann bevorzugt gegebenenfalls zum Beispiel für jeden Sollwert erfolgen. Die Anzahl der Sollwerte kann dabei gegebenenfalls zum Beispiel mit der Anzahl der zu überwachenden Polymerstränge übereinstimmen. Dadurch kann das Vorhandensein und/oder die Breite der Polymerstränge und insbesondere jedes Polymerstrangs überwacht werden. Alternativ und/oder zusätzlich dazu können für jeden Sollwert Pixel, deren Farbwerte nicht dem Sollwert entsprechen und/oder ausreichend ähneln, gezählt werden, um die Qualität des optischen Erscheinungsbilds mindestens eines Polymerstrangs zu kontrollieren. Sofern die Anzahl der Pixel, deren Farbwerte mindestens einem der Sollwert entsprechen und/oder ausreichend ähneln und somit einem der Polymerstränge zugeordnet werden können, unter einem bestimmten frei wählbaren Grenzwert liegt, kann mindestens ein Alarmsignal und/oder mindestens ein Steuersignal generiert und/oder ausgesendet werden. In der Tat kann in diesem Fall zum Beispiel davon ausgegangen werden, dass die Breite des entsprechenden Stranges gegebenenfalls von einer Sollbreite abweicht und/oder dass die Produktion des entsprechenden Polymerstrangs unterbrochen wurde. Ein Grenzwert kann dabei gegebenenfalls zum Beispiel der Sollbreite eines Polymerstrangs und/oder einer Mindestbreite eines Polymerstrangs und/oder einer Mindestmenge an Pixeln, die einem Polymerstrang zugeordnet werden können, und/oder einer Sollmenge an Pixeln, die einem Polymerstrang zugeordnet werden können, entsprechen. Sofern die Anzahl der Pixel, deren Farbwerte mindestens einem der Sollwert entsprechen und/oder ausreichend ähneln und somit einem Polymerstrang zugeordnet werden können, über einem bestimmten frei wählbaren Grenzwert liegt, kann ebenfalls mindestens ein Alarmsignal und/oder mindestens ein Steuersignal generiert und/oder ausgesendet werden, da die Breite eines entsprechenden Polymerstrangs in diesem Fall ebenfalls von einer Sollbreite abweichen kann. Ein Grenzwert kann dabei gegebenenfalls zum Beispiel der Sollbreite eines Polymerstrangs und/oder einer Sollmenge an Pixeln, die einem Polymerstrang zugeordnet werden können, entsprechen. Zudem kann dabei gegebenenfalls angezeigt werden, für welchen Sollwert und/oder für welche der Sollwerte ein Grenzwert für die Anzahl der Pixel, deren Farbwerte einem Sollwert entsprechen und/oder ausreichend ähneln, über- oder unterschritten wurde. Dadurch kann nicht nur die Qualität des optischen Erscheinungsbilds mehrerer Polymerstränge sondern auch deren Breite und/oder die Kontinuität ihrer Produktion kontrolliert werden.

In einer Ausführungsform des Verfahrens zur optischen Qualitätskontrolle von extrudierten Polymersträngen, kann/können mindestens ein bevorzugt jedoch mindestens zwei oder mehr unterschiedliche Bereich(e) der gewonnen Bilddaten und/oder mindestens eine bevorzugt jedoch mindestens zwei oder unterschiedliche Pixelgruppe(n) ausgewählt werden, sodass innerhalb des/der beziehungsweise bevorzugt jedes Bereiche(s) und/oder innerhalb der beziehungsweise bevorzugt jeder Pixelgruppe(n) Pixel, deren Farbwerte einem Sollwert entsprechen und/oder ausreichend ähneln, gezählt und/oder gegebenenfalls zum Beispiel entsprechend jeweils einem Polymerstrang zugeordnet werden können. Dies kann insbesondere zum Beispiel sinnvoll sein, wenn mehrere Polymerstränge kontrolliert werden sollen. Dadurch kann das Vorhandensein und/oder die Breite der Polymerstränge und insbesondere jedes Polymerstrangs überwacht werden. Alternativ und/oder zusätzlich dazu können innerhalb des/der beziehungsweise bevorzugt jedes Bereiche(s) und/oder innerhalb der beziehungsweise bevorzugt jeder Pixelgruppe(n) Pixel, deren Farbwerte nicht einem Sollwert entsprechen und/oder ausreichend ähneln, gezählt werden, um die Qualität des optischen Erscheinungsbilds mindestens eines Polymerstrangs zu kontrollieren. Innerhalb eines Bereiches beziehungsweise eines ausgewählten Bereiches kann dabei für einen Bereich beziehungsweise für einen ausgewählten Bereich bedeuten. Ein Bereich der Bilddaten und/oder eine Pixelgruppe kann dabei bevorzugt zum Beispiel mit.einem Abschnitt der gewonnenen Bilddaten übereinstimmen, in dem ein Polymerstrang verläuft. Ein Bereich beziehungsweise ein Bereich der Bilddaten kann dabei eine Pixelgruppe beziehungsweise eine Pixelgruppe der Billdaten darstellten. Eine Pixelgruppe kann dabei bevorzugt zum Beispiel eine Gruppe von mindestens zwei oder mehr bevorzugt aneinander angrenzenden Pixeln darstellen. Die Anzahl der ausgewählten Bereiche kann dabei bevorzugt zum Beispiel mit der Anzahl der zu überwachenden Polymerstränge übereinstimmen. Liegt die Anzahl der Pixel, deren Farbwerte mindestens einem Sollwert entsprechen und/oder ausreichend ähneln, in mindestens einem ausgewählten Bereich beziehungsweise einer ausgewählten Pixelgruppe unter einem bestimmten frei wählbaren Grenzwert, kann mindestens ein Alarmsignal und/oder mindestens ein Steuersignal generiert und/oder ausgesendet werden. Ein Grenzwert kann dabei gegebenenfalls zum Beispiel der Sollbreite eines Polymerstrangs und/oder einer Mindestbreite eines Polymerstrangs und/oder einer Mindestmenge an Pixeln, die einem Polymerstrang zugeordnet werden können, und/oder einer Sollmenge an Pixeln, die einem Polymerstrang zugeordnet werden können, entsprechen. In der Tat kann in diesem Fall zum Beispiel davon ausgegangen werden, dass die Breite des entsprechenden Stranges gegebenenfalls von einer Sollbreite abweicht und/oder dass die Produktion des entsprechenden Polymerstrangs unterbrochen wurde, weil der Strang zum Beispiel abgerissen ist. Dadurch kann die Breite und/öder das Vorhandensein der Polymerstränge überwacht werden. Sofern die Anzahl der Pixel, deren Farbwerte einem der Sollwert entsprechen und/oder ausreichend ähneln und somit einem Polymerstrang zugeordnet werden können, in mindestens einem ausgewählten Bereich beziehungsweise einer ausgewählten Pixelgruppe über einem bestimmten frei wählbaren Grenzwert liegt, kann ebenfalls mindestens ein Alarmsignal und/oder mindestens ein Steuersignal generiert und/oder ausgesendet werden, da die Breite eines entsprechenden Polymerstrangs in diesem Fall ebenfalls von einer Sollbreite abweichen kann. Ein Grenzwert kann dabei gegebenenfalls zum Beispiel der Sollbreite eines Polymerstrangs und/oder einer Sollmenge an Pixeln, die einem Polymerstrang zugeordnet werden können, entsprechen. Die Auswahl mindestens eines Bereiches beziehungsweise mindestens einer Pixelgruppe, kann dabei insbesondere zum Beispiel anhand eines Kontrollterminals mit mindestens einer Anzeigeeinheit, wie zum Beispiel einem Bildschirm, erfolgen, welche Bilddaten, die durch mindestens eine Aufnahmeeinheit gewonnen werden, anzeigen kann. Zudem kann dabei gegebenenfalls angezeigt werden, für welche(n) ausgewählte(n) Bereich/Pixelgruppe und/oder für welche der ausgewählten Bereiche/Pixelgruppen ein Grenzwert für die Anzahl der Pixel, deren Farbwerte einem Sollwert entsprechen und/oder ausreichend ähneln, über- oder unterschritten wurde. Dadurch kann nicht nur die Qualität des optischen Erscheinungsbilds mehrerer Polymersträngen sondern auch deren Breite und/oder die Kontinuität ihrer Produktion kontrolliert werden.

In einer Ausführungsform des Verfahrens zur optischen Qualitätskontrolle von extrudierten Polymersträngen kann zum Beispiel die Anzahl der Pixel, deren Farbwert von mindestens einem Sollwert abweicht, ermittelt werden. Dazu werden Bilddaten und insbesondere mindestens ein Farbwert für jedes Pixel, für welches Bilddaten gewonnen werden, und/oder bevorzugt jedes Pixel, für welches Bilddaten gewonnen werden und das nicht dem Hintergrund zugeordnet wird, mit mindestens einem Sollwert für den Farbwert verglichen. Demnach kann zum Beispiel die Anzahl der Pixel ermittelt werden, deren Farbwerte nicht mindestens einem Sollwert entsprechen und/oder ausreichend ähneln, um die Qualität des optischen Erscheinungsbilds mindestens eines Polymerstrangs zu kontrollieren. Bevorzugt kann zum Beispiel für jeden Sollwert die Anzahl der Pixel ermittelt werden, deren Farbwerte nicht dem Sollwert entsprechen und/oder diesem nicht ausreichend ähneln. In einer Ausführungsform des Verfahrens zur optischen Qualitätskontrolle von extrudierten Polymersträngen kann zum Beispiel die Anzahl der Pixel ermittelt werden, deren Farbwerte zum Beispiel innerhalb eines und/oder bevorzugt jedes ausgewählten Bereichs nicht mindestens einem Sollwert entsprechen und/oder diesem nicht ausreichend ähneln. Bevorzugt kann zum Beispiel für jeden Sollwert die Anzahl der Pixel ermittelt werden, deren Farbwerte zum Beispiel innerhalb eines und/oder bevorzugt jedes ausgewählten Bereichs dem Sollwert nicht entsprechen und/oder diesem nicht ausreichend ähneln. Sofern die Anzahl der Pixel, deren Farbwerte nicht mindestens einem Sollwert entsprechen und/oder ausreichend ähneln, und/oder die Anzahl der Pixel, deren Farbwerte nicht mindestens einem Sollwert entsprechen und/oder ausreichend ähneln und die in einem frei wählbaren Zeitintervall festgestellt werden, über einem frei wählbaren Grenzwert liegt/liegen und/oder für mindestens einen ausgewählten Bereich über einem frei wählbaren Grenzwert liegt/liegen, kann mindestens ein Alarmsignal und/oder mindestens ein Steuersignal generiert und/oder ausgesendet werden. Zudem kann dabei gegebenenfalls angezeigt werden, für welchen Sollwert und/oder für welche der Sollwerte und/oder innerhalb welchen Bereiches und/oder innerhalb welcher Bereiche ein Grenzwert für die Anzahl und/oder die Anzahl in einem Zeitintervall der Pixel, deren Farbwerte einem Sollwert nicht entsprechen und/oder ausreichend ähneln, überschritten wurde. Dadurch kann die Qualität des optischen Erscheinungsbilds eines Polymerstrangs kontrolliert werden, wobei zum Beispiel Farbabweichungen und/oder Verfärbungen und/oder Einschlüsse erkannt Werden können.

In einer Ausführungsform des Verfahrens zur optischen Qualitätskontrolle von extrudierten Polymersträngen können Bilddaten und insbesondere mindestens ein Farbwert für mindestens ein Pixel gewonnen und mit mindestens einem Sollwert für den Farbwert verglichen werden, um einen Kontrastwert zu ermitteln beziehungsweise zu errechnen. Sofern mehrere Sollwerte für den Farbwert verwendet werden, können mehrere Kontrastwerte ermittelt beziehungsweise errechnet werden. Ein Kontrastwert kann dabei bevorzugt für jedes Pixel, für welches Bilddaten gewonnen werden, und/oder für alle Pixel, für welche Bilddaten gewonnen werden und die nicht dem Hintergrund zugeordnet werden können, ermittelt beziehungsweise errechnet werden. Zudem kann mindestens ein ermittelter/errechneter Kontrastwert beziehungsweise bevorzugt ein ermittelter/errechneter Kontrastwert für jedes Pixel und/oder für alle Pixel, für welche Bilddaten gewonnen werden und die nicht dem Hintergrund zugeordnet werden können, zum Beispiel mit mindestens einem Sollwert und insbesondere mit mindestens einem Sollwert für den Kontrastwert verglichen werden. Alternativ können gegebenenfalls Farbwerte für mindestens zwei Pixel gewonnen, ermittelt und/oder verglichen werden, um zum Beispiel mindestens einen Kontrastwert zu ermitteln beziehungsweise zu errechnen. Dabei kann eine frei wählbare Toleranz beziehungsweise ein frei wählbarer Toleranzbereich für den Kontrastwert festgelegt werden. Ein Kontrastwert, der über den Sollwert für den Kontrastwert aber dennoch innerhalb der gegebenenfalls gewählten Toleranz beziehungsweise des gewählten Toleranzbereichs liegt, kann dabei als Kontrastwert gelten, der unter dem Sollwert für den Kontrastwert liegt. Ein hoher Kontrastwert kann dabei zum Beispiel ermittelt beziehungsweise errechnet werden, wenn der/die Farbwert(e) und/oder ein Sollwert für den Farbwert sehr unterschiedlichen beziehungsweise stark kontrastierenden Farben, wie zum Beispiel Schwarz und Weiß und/oder Rot und Grün, entsprechen, die zum Beispiel jeweils im Vergleich zueinander einen hohen Kontrast aufweisen können. Ein geringer Kontrastwert kann dabei zum Beispiel ermittelt beziehungsweise errechnet werden, wenn der/die Farbewert(e) und/oder ein Sollwert für den Farbwert zwei wenig unterschiedlichen beziehungsweise wenig kontrastierenden Farben, wie zum Beispiel hellgrau und dunkelgrau und/oder hellrot und dunkelrot, entsprechen, die zum Beispiel jeweils im Vergleich zueinander lediglich einen geringen Kontrast aufweisen können. Ein Sollwert für den Kontrastwert kann dabei insbesondere zum Beispiel eingegeben und/oder ausgewählt und insbesondere zum Beispiel aus vorgegebenen Werten ausgewählt werden. Wird/werden mindestens ein Kontrastwert und/oder mindestens eine frei wählbare Anzahl von Kontrastwerten und/oder mindestens eine frei wählbare Anzahl von Kontrastwerten innerhalb eines frei wählbaren Zeitintervalls ermittelt, der/die über einem Sollwert liegt/liegen und/oder für mindestens einen ausgewählten Bereich über einem Sollwert liegt/liegen, kann mindestens ein Alarmsignal und/oder mindestens ein Steuersignal generiert und/oder ausgesendet werden. Zudem kann dabei gegebenenfalls angezeigt werden für welchen der Sollwerte und/oder innerhalb welches Bereiches und/oder innerhalb welcher Bereiche ein Grenzwert für die Anzahl und/oder die Anzahl in einem Zeitintervall der Kontrastwerte, die über dem Sollwert liegen, überschritten wurde. Dadurch können Farbabweichungen, Verfärbungen und/oder Einschlüsse erkannt werden, da diese oft eine Farbe aufweisen, die sich stark von der Farbe eines Polymerstrangs unterscheiden beziehungsweise stark damit kontrastieren kann. Zudem hängt die Beeinträchtigung des optischen Erscheinungsbilds eines hergestellten Polymerstrangs beziehungsweise des daraus hergestellten Granulats gegebenenfalls vom Kontrast zwischen der Farbe des Polymerstrangs und/oder des Granulats und der bei Farbabweichungen, Verfärbungen und/oder Einschlüsse auftretenden Farbe ab. Die Beeinträchtigung des optischen Erscheinungsbilds eines hergestellten Polymerstrangs beziehungsweise des daraus hergestellten Granulats kann dabei bei einem starken Kontrast zwischen der Farbe des Polymerstrangs und/oder des Granulats und der bei Farbabweichungen, Verfärbungen und/oder Einschlüsse auftretenden Farbe größer und bei einem geringen Kontrast zwischen der Farbe des Polymerstrangs und/oder des Granulats und der bei Farbabweichungen, Verfärbungen und/oder Einschlüsse auftretenden Farbe kleiner sein. Der Sollwert kann dabei insbesondere einen Sollwert für den Kontrastwert darstellen, welcher zum Beispiel bevorzugt ausreichend klein ist, damit eine lediglich geringe Beeinträchtigung des optischen Erscheinungsbilds eines hergestellten Polymerstrangs beziehungsweise des daraus hergestellten Granulats sichergestellt ist.

Dass mindestens ein Alarmsignal und/oder mindestens ein Steuersignal generiert und/oder ausgesendet werden kann, kann dabei insbesondere zum Beispiel bedeuten, dass mindestens ein Alarm und insbesondere zum Beispiel ein akustischer und/oder visueller Alarm erfolgen und/oder ausgelöst werden kann und/oder dass mindestens ein Steuersignal zum Beispiel in mindestens einer Vorrichtung generiert und/oder an mindestens eine Vorrichtung ausgesendet werden kann, die bevorzugt zum Beispiel ebenfalls in der Produktionslinie und insbesondere nach der/den Aufnahmeeinheit(en) angeordnet sein kann. Bei der Vorrichtung kann es sich dabei zum Beispiel insbesondere um eine Vorrichtung zur optischen Qualitätskontrolle von extrudierten Polymersträngen und/oder um den Extruder und/oder um mindestens ein akustisches und/oder visuelles Warnmittel und/oder um den Granulator beziehungsweise den Zerkleinerer und/oder um eine Vorrichtung zum Umleiten der Ausgabe des vom Granulator produzierten Polymergranulats handeln. Zudem kann mindestens ein Steuersignal zum Beispiel ein Signal sein, welches dazu verwendet werden kann, die Ausgabe des vom Granulator produzierten Polymergranulats von einem Behälter in einen anderen Behälter umzuleiten und/oder ein Signal sein, welches dazu verwendet werden kann mindestens einen Polymerstrang umzulenken beziehungsweise einen Polymerstrang gezielt umzulenken. Des Weiteren können zum Beispiel auch mehrere Alarmsignale und/oder mehrere Steuersignale generiert und/oder ausgesendet werden. Mehrere Alarmsignale und/oder mehrere Steuersignale können dabei insbesondere zum Beispiel generiert und/oder ausgesendet werden, wenn unterschiedliche Werte und/oder Grenzwerte erreicht und/oder nicht erreicht werden können. Dadurch können beim Erreichen und/oder nicht Erreichen unterschiedlicher Werte/Grenzwerte jeweils bestimmte Maßnahmen ergriffen werden. Werte/Grenzwerte können dabei zum Beispiel eine Anzahl von Pixeln darstellen, deren Farbwerte nicht dem Sollwert entsprechen und/oder diesem nicht ausreichend ähneln, und/ oder eine Anzahl von Pixeln sein, deren Farbwerte dem Sollwert entsprechen und/oder diesem ausreichend ähneln, und/oder eine prozentuale Farbabweichung und/oder eine bestimmte Breite und/oder eine Anzahl von Polymersträngen beziehungsweise Pixelgruppen, deren Farbwerte mindestens einem Sollwert entsprechen und/oder diesem nicht ausreichend ähneln, und/oder eine Anzahl von Kontrastwerten, die über einem Sollwert liegen. Dadurch kann/können nicht nur das optische Erscheinungsbild eines Polymerstrangs und des daraus hergestellten Polymergranulats kontrolliert werden, sondern zudem gegebenenfalls auch auf eine Beeinträchtigung des optischen Erscheinungsbilds bereits während der Produktion und demnach quasi in Echtzeit durch mindestens einen Alarm hingewiesen und/oder Maßnahmen zur Sicherung der Qualität des optischen Erscheinungsbilds bei Beeinträchtigung bereits während der Produktion und demnach quasi in Echtzeit und/oder gegebenenfalls automatisch, zum Beispiel durch Steuersignale, veranlasst werden.

Darüber hinaus betrifft die vorliegende Erfindung auch eine Vorrichtung zur optischen Qualitätskontrolle von extrudierten Polymersträngen, die zur Herstellung von Polymergranulat verwendet werden können, welche mindestens eine Aufnahmeeinheit, mindestens eine Lichtquelle und mindestens ein Führungsmittel umfassen kann. Mindestens eine Lichtquelle kann es dabei ermöglichen, dass mindestens eine Aufnahmeeinheit zumindest einen Teil mindestens eines Polymerstrangs optisch erfassen und Bilddaten gewinnen kann. Insbesondere kann durch mindestens eine Lichtquelle die Ausleuchtung/Beleuchtung mindestens eines Polymerstrangs sichergestellt werden. Zudem können dadurch zum Beispiel auch Einschlüsse und/oder Black-Spacks innerhalb mindestens eines Polymerstrangs gegebenenfalls einfacher entdeckt werden. Mindestens ein Führungsmittel kann darüber hinaus zum Beispiel ein Teil darstellen, welches zur Aufnahme und/oder zur Führung mindestens eines Polymerstrangs vorgesehen sein kann. Ein Führungsmittel kann mindestens einen Polymerstrang aufnehmen und/oder führen und insbesondere zum Beispiel bevorzugt so aufnehmen und/oder führen, dass zumindest ein Teil mindestens eines Polymerstrangs von mindestens einer Aufnahmeeinheit optisch erfasst werden kann. Mindestens ein Polymerstrang kann dabei insbesondere zu Beispiel durch mindestens ein Führungsmittel aufgenommen und/oder zum Beispiel über und/oder unter eine Aufnahmeeinheit geführt werden. Die Vorrichtung zur optischen Qualitätskontrolle von extrudierten Polymersträngen kann insbesondere ein erfindungsgemäßes Verfahren zur optischen Qualitätskontrolle von extrudierten Polymersträngen mit allen seinen beschriebenen Merkmalen umsetzen beziehungsweise in einem solchen Verfahren verwendet werden. Dadurch kann die Qualität des optischen Erscheinungsbilds von einem oder mehreren Polymersträngen kontrolliert werden, wobei zum Beispiel Farbabweichungen und/oder Verfärbungen und/oder Einschlüsse erkannt werden können, um Rückschlüsse bezüglich der Qualität des optischen Erscheinungsbilds des/der jeweiligen Polymerstrangs/Polymerstränge und des/der respektive daraus hergestellten Polymergranulats/Polymergranulate zu ermöglichen.

In einer Ausführungsform der Vorrichtung zur optischen Qualitätskontrolle von extrudierten Polymersträngen, kann die Vorrichtung zum Beispiel auch mehrere und insbesondere zum Beispiel 2 oder 4 Aufnahmeeinheiten insbesondere zum Beispiel zum optischen Erfassen zumindest eines Teils mindestens eines Polymerstranges und/oder mehrere und insbesondere zum Beispiel 2 oder 4 Lichtquellen insbesondere zum Beispiel zum Beleuchten/Ausleuchten zumindest eines Teils mindestens eines Polymerstranges umfassen. Eine Lichtquelle kann dabei jeweils mehrere Leuchtmittel, wie zum Beispiel Glühbirnen, Leuchtröhren und/oder LEDs umfassen. Zudem kann eine Lichtquelle zum Beispiel zweiteilig ausgeführt sein und/oder eine Öffnung aufweisen, damit mindestens eine Aufnahmeeinheit zumindest einen Teil mindestens eines Polymerstrangs durch eine Öffnung in der Lichtquelle und/oder zwischen zwei Teilen der Lichtquelle optisch erfasst werden kann. Des Weiteren kann eine Lichtquelle zum Beispiel mit Reflektoren so gestaltet werden, dass ein Maximum an Licht auf mindestens einen Polymerstrang gerichtet wird. Mehrere Aufnahmeeinheiten und/oder mehrere Lichtquellen können dabei zum Beispiel dazu verwendet werden, um mindestens einen Polymerstrang aus mehreren Blickwinkeln optisch zu erfassen und/oder zu beleuchten. In einer Ausführungsform der Vorrichtung zur optischen Qualitätskontrolle von extrudierten Polymersträngen, kann die Vorrichtung zum Beispiel mindestens zwei Aufnahmeeinheiten und/oder zwei Lichtquellen umfassen, die bevorzugt zum Beispiel so angeordnet sein können, dass mindestens ein Polymerstrang von mindestens einer Aufnahmeeinheit und/oder einer Lichtquelle von oben und von mindestens einer weiteren Aufnahmeeinheit und/oder einer weiteren Lichtquelle von unten optisch erfasst und/oder beleuchtet werden kann. Bevorzugt kann mindestens ein Polymerstrang dabei gleichzeitigt durch mindestens zwei Lichtquellen und von mindestens zwei Seiten und insbesondere zum Beispiel von oben und von unten beleuchtet/ausgeleuchtet werden. Die gleichzeitige Ausleuchtung/Beleuchtung durch mindestens zwei Lichtquellen und von mindestens zwei Seiten, insbesondere zum Beispiel von oben und von unten, kann dabei besonders bevorzugt werden, da mindestens ein Polymerstrang dadurch gegebenenfalls zumindest teilweise durchleuchtet werden kann. Dadurch kann optische Qualitätskontrolle verbessert werden, da Farbabweichungen und/oder Einschlüsse und/oder Verfärbungen gegebenenfalls besser entdeckt werden können. In einer Ausführungsform der Vorrichtung zur optischen Qualitätskontrolle von extrudierten Polymersträngen, kann die Vorrichtung zum Beispiel mindestens vier Aufnahmeeinheiten und/oder mindestens vier Lichtquellen umfassen, die bevorzugt zum Beispiel so angeordnet sein können, dass mindestens ein Polymerstrang von mindestens einer Aufnahmeeinheit und/oder einer Lichtquelle von oben, von mindestens einer weiteren Aufnahmeeinheit und/oder einer weiteren Lichtquelle von unten, von mindestens einer weiteren Aufnahmeeinheit und/oder einer weiteren Lichtquelle von rechts und von mindestens einer weiteren Aufnahmeeinheit und/oder einer weiteren Lichtquelle von links optisch erfasst und/oder beleuchtet werden kann. Die Anzahl der Aufnahmeeinheiten der Vorrichtung zur optischen Qualitätskontrolle von extrudierten Polymersträngen braucht nicht mit der Anzahl der Lichtquellen der Vorrichtung zur optischen Qualitätskontrolle von extrudierten Polymersträngen übereinzustimmen. Insbesondere kann die Vorrichtung zur optischen Qualitätskontrolle von extrudierten Polymersträngen zum Beispiel eine Aufnahmeeinheit und/oder zwei Lichtquellen sowie zum Beispiel zwei Aufnahmeeinheiten und/oder vier Lichtquellen umfassen. Durch die Verwendung von mehreren Aufnahmeeinheiten und/oder von mehreren Lichtquellen kann mindestens ein Polymerstrang besser beziehungsweise umfangreicher und insbesondere zum Beispiel aus mehreren unterschiedlichen Blickwinkeln optisch erfasst und/oder beleuchtet werden. Dadurch kann die optische Qualitätskontrolle verbessert werden, da das optische Erscheinungsbild aus mehreren unterschiedlichen Blickwinkeln bewertet werden kann und Farbabweichungen und/oder Einschlüsse und/oder Verfärbungen gegebenenfalls besser entdeckt werden können.

In einer Ausführungsform der Vorrichtung zur optischen Qualitätskontrolle von extrudierten Polymersträngen, kann die Vorrichtung zum Beispiel mindesten eine bevorzugt mindestens zwei Aufnahmeeinheit(en) und/oder mindestens bevorzugt mindestens zwei Lichtquelle(n) umfassen, die bevorzugt zum Beispiel jeweils gegenüber mindestens einem Führungsmittel angeordnet sein kann/können. Dabei kann/können mindestens eine beziehungsweise jede Aufnahmeeinheit und/oder mindestens eine beziehungsweise jede Lichtquelle jeweils gegenüber mindestens einem Führungsmittel angeordnet sein. Bevorzugt kann/können mindestens eine bevorzugt mindestens zwei Aufnahmeeinheit(en) und/oder mindestens eine bevorzugt mindestens zwei Lichtquelle(n) zum Beispiel so angeordnet sein, dass jede Aufnahmeeinheit und/oder jede Lichtquelle mindestens einen Polymerstrang von einer Seite optisch erfassen und/oder beleuchten kann, wobei mindestens ein Polymerstrang jeweils zwischen mindestens einer und bevorzugt jeder Aufnahmeeinheit beziehungsweise mindestens einer und bevorzugt jeder Lichtquelle und mindestens einem und bevorzugt jedem Führungsmittel geführt wird und wobei ferner das auf der gegenüberliegenden Seite des Polymerstrangs angeordnete Führungsmittel als Hintergrund beim optischen Erfassen dienen kann. Bei mindestens zwei Aufnahmeeinheiten und/oder mindestens zwei Lichtquellen, die jeweils gegenüber mindestens einem Führungsmittel angeordnet sein können, kann eine Aufnahmeeinheit und/oder eine Lichtquelle mindestens einen Polymerstrang von oben mit mindestens einem Führungsmittel als Hintergrund optisch erfassen und/oder beleuchten und eine weitere Aufnahmeeinheit und/oder eine weitere Lichtquelle mindestens einen Polymerstrang von unten mit mindestens einem Führungmittel als Hintergrund optisch erfassen und/oder beleuchten. Gegenüber angeordnet kann dabei zum Beispiel insbesondere gegenüberliegend angeordnet beziehungsweise unmittelbar und/oder genau gegenüberliegend angeordnet bedeuten und/oder gegebenenfalls auch in gegenüberliegenden Teilen der Vorrichtung zur optischen Qualitätskontrolle von extrudierten Polymersträngen angeordnet bedeuten. Dadurch kann ein Führungsmittel als neutraler Hintergrund dienen und/oder die Beleuchtung mindestens eines Polymerstrangs optimiert werden und/oder mindestens ein Polymerstrang zumindest teilweise durchleuchtet werden, um das optische Erfassen mindestens eines Polymerstrangs zu vereinfachen und/oder zu verbessern.

Des Weiteren können mindestens zwei Lichtquellen und/oder mindestens zwei Aufnahmeeinheiten gegebenenfalls jeweils auf gegenüberliegenden Seiten von mindestens einem Führungsmittel angeordnet sein. Ein Führungsmittel kann demnach zum Beispiel zwischen zwei Aufnahmeeinheiten und/oder zwischen zwei Lichtquellen angeordnet sein. Mindestens ein Polymerstrang kann durch ein Führungsmittel aufgenommen und/oder geführt und zwischen zwei Aufnahmeeinheiten und/oder zwischen zwei Lichtquellen hindurch geführt werden, sodass zumindest ein Teil mindestens eines Polymerstrangs durch jede der zwei Aufnahmeeinheiten und/oder durch jede der zwei Lichtquellen optisch erfasst und/oder beleuchtet werden kann. Bevorzugt können mindestens zwei Lichtquellen und/oder zwei Aufnahmeeinheiten dabei zum Beispiel so angeordnet sein, dass mindestens ein Polymerstrang durch mindestens ein Führungsmittel aufgenommen und/oder entlang mindestens einem Führungsmittel zwischen jede der Lichtquellen beziehungsweise jede der Aufnahmeeinheiten geführt wird, wobei mindestens eine Aufnahmeeinheit und/oder mindestens eine Lichtquelle mindestens einen Polymerstrang von oben mit einem Führungsmittel als Hintergrund und/oder durch mindestens ein Führungsmittel hindurch optisch erfassen und/oder beleuchten kann und mindestens eine weitere Aufnahmeeinheit und/oder mindestens eine weitere Lichtquelle mindestens diesen Polymerstrang von unten ebenfalls mit einem Führungsmittel als Hintergrund und/oder durch mindestens ein Führungsmittel hindurch optisch erfassen und/oder beleuchten kann. Dadurch kann ein Führungsmittel als neutraler Hintergrund dienen und/oder die Beleuchtung mindestens eines Polymerstrangs optimiert werden und/oder mindestens ein Polymerstrang zumindest teilweise durchleuchtet werden, um das optische Erfassen mindestens eines Polymerstrangs zu vereinfachen und/oder zu verbessern.

Dabei kann bevorzugt zum Beispiel je mindestens eine Aufnahmeeinheit und/oder je mindestens eine Lichtquelle in einem oberen Teil einer erfindungsgemäßen Vorrichtung zur optischen Qualitätskontrolle von extrudierten Polymersträngen und je mindestens eine Aufnahmeeinheit und/oder je mindestens eine Lichtquelle in einem unteren Teil einer erfindungsgemäßen Vorrichtung zur optischen Qualitätskontrolle von extrudierten Polymersträngen vorgesehen sein. Dadurch können sowohl die Oberseite als auch die Unterseite mindestens eines Polymerstrangs mit einem neutralen Hintergrund und/oder einer optimierten Beleuchtung optisch erfasst werden und/oder mindestens ein Polymerstrang zumindest teilweise durchleuchtet werden, um das optische Erfassen mindestens eines Polymerstrangs zu vereinfachen und/oder zu verbessern.

In einer Ausführungsform der Vorrichtung zur optischen Qualitätskontrolle von extrudierten Polymersträngen, kann die Vorrichtung als Aufnahmeeinheit zum Beispiel mindestens eine Zeilen- und/oder mindestens eine Flächenkamera und/oder mindestens eine Farbkamera und/oder mindestens eine Schwarzweißkamera umfassen. In einer Ausführungsform der Vorrichtung zur optischen Qualitätskontrolle von extrudierten Polymersträngen, kann die Vorrichtung für jede Schwarzweißkamera auch eine Farbkamera umfassen, die ebenfalls mindestens einen Teil und bevorzugt den gleichen Teil und/oder einen benachbarten Teil mindestens eines Polymerstrangs optisch erfassen kann, wobei zwischen der Schwarzweißkamera und der Farbkamera umgeschaltet werden kann. Die Verwendung einer Farbkamera als Aufnahmeeinheit kann insbesondere sinnvoll sein, wenn farbige Polymerstränge hergestellt und kontrolliert werden sollen, da die damit gewonnenen Bilddaten gegebenenfalls mehr Informationen und/oder genauere Informationen zu Farbwerten umfassen können. Die Verwendung einer Schwarzweißkamera als Aufnahmeeinheit kann jedoch insbesondere sinnvoll sein, wenn transparente und/oder transluzente Polymerstränge hergestellt und kontrolliert werden sollen, da die damit gewonnenen Bilddaten in diesem Fall höhere Kontrastwerte beziehungsweise mehr und/oder differenzierte Grauwerte aufweisen können. Die Verwendung einer Zeilenkamera als Aufnahmeeinheit kann insbesondere sinnvoll sein, wenn hohe Abzugsgeschwindigkeiten vorgesehen werden sollen, da eine Zeilenkamera nur jeweils eine Zeile aufnimmt und Aufnahmen daher in sehr schneller Abfolge nacheinander erfolgen können. Demnach können Bilddaten dadurch sehr schnell und bevorzugt möglichst lückenlos gewonnen werden. Dadurch kann die Vorrichtung an das zu kontrollierende Material und/oder an die Abzugsgeschwindigkeit angepasst werden und die Kontrolle der Qualität des optischen Erscheinungsbilds von einem oder mehreren Polymersträngen gegebenenfalls verbessert werden.

Die Vorrichtung zur optischen Qualitätskontrolle von extrudierten Polymersträngen, kann zudem für jede Aufnahmeeinheit mindestens einen Spiegel umfassen, welcher Lichtstrahlen umlenken kann, und es dadurch ermöglichen kann, dass mindestens eine Aufnahmeeinheit auch bei einer Anordnung, die keine direkte Erfassung eines Teils mindestens eine Polymerstrangs ermöglicht, zumindest einen Teil der Polymerstränge indirekt über mindestens einen Spiegel und/oder insbesondere zum Beispiel durch eine Öffnung in einer Lichtquelle und/oder zwischen den Teilen einer Lichtquelle optisch erfassen kann. Dadurch können die Aufnahmeeinheiten freier angeordnet werden.

In einer Ausführungsform der Vorrichtung zur optischen Qualitätskontrolle von extrudierten Polymersträngen, kann die Vorrichtung mindestens ein Kühlmittel und/oder mindestens einen Kühlkörper und/oder mindestens eine Kühlleitung und/oder mindestens eine Kühldüse und/oder mindestens eine Kühlvorrichtung zum Kühlen mindestens einer Lichtquelle umfassen. Die Kühlung kann dabei bevorzugt zum Beispiel Druckluft zum Beispiel durch mindestens eine Kühldüse und/oder mindestens einen Kühlkörper erfolgen. Druckluft kann dabei zum Beispiel entweder in der Vorrichtung zur optischen Qualitätskontrolle von extrudierten Polymersträngen, oder von außen über einen Anschluss zugeführt werden. Dadurch kann eine hohe Beleuchtungsstärke erreicht und/oder die Langlebigkeit der Lichtquelle verbessert werden.

In einer Ausführungsform der Vorrichtung zur optischen Qualitätskontrolle von extrudierten Polymersträngen, kann die Vorrichtung zum Beispiel mindesten ein Führungsmittel umfassen, welches zum Beispiel insbesondere mindestens eine Führungsrolle und/oder mindestens eine Führungswalze und/oder mindestens einen Führungstisch beziehungsweise mindestens einen profilierten Führungstisch und/oder mindestens eine Führungsrille und/oder mindestens einen Führungskanal und und/oder mindestens einen Führungskamm umfassen kann. Ein Führungsmittel kann mindestens einen Polymerstrang aufnehmen und/oder führen und insbesondere zum Beispiel bevorzugt so aufnehmen und/oder führen, dass zumindest ein Teil mindestens eines Polymerstrangs von mindestens einer Aufnahmeeinheit optisch erfasst werden kann. Mindestens eine Führungsrolle und/oder mindestens eine Führungswalze.können mindestens einen Polymerstrang dabei aufnehmen und/oder führen und den Polymerstrang dabei zum Beispiel gegebenenfalls auch unter Spannung halten. Eine Führungsrolle und/oder eine Führungswalze kann daher zum Beispiel auch eine Spannrolle und/oder Spannwalze darstellen. Eine Führungsrolle und/oder eine Führungswalze kann dabei gegebenenfalls zum Beispiel auch eine profilierte Oberfläche umfassen, wobei eine Führungsrolle und/oder eine Führungswalze gegebenenfalls zum Beispiel mindestens eine bevorzugt jedoch mehrere Führungsrille(n) umfassen kann. Durch mindestens ein Führungsmittel kann mindestens ein bevorzugt jeder Polymerstrangs aufgenommen und/oder geführt werden und insbesondere so durch die erfindungsgemäße Vorrichtung zur optischen Qualitätskontrolle von extrudierten Polymersträngen geführt werden, dass zumindest ein Teil eines und bevorzugt jedes Polymerstrangs durch mindestens eine Aufnahmeeinheit optisch erfasst werden kann, um das optische Erscheinungsbild jedes Polymerstrangs zu kontrollieren. Ein Führungskamm kann zum Beispiel ein kammartiges Teil sein, welches dazu verwendet werden kann, einzelne Polymersträngen mechanisch voneinander zu trennen, insbesondere zum Beispiel vor dem optischen Erfassen durch mindestens eine Aufnahmeeinheit. Dadurch kann die optische Erfassung der einzelnen Polymerstränge vereinfacht werden. Ein Führungstisch beziehungsweise ein profilierter Führungstisch kann einen Tisch und insbesondere zum Beispiel einen Tisch mit einer gewellten Oberfläche beziehungsweise einen Tisch mit einer profilierten Oberfläche darstellen, über den mindestens ein Polymerstrang geführt werden kann. Demnach kann ein Führungstisch durch die Gestaltung seiner Oberfläche gegebenenfalls zum Beispiel mindestens eine bevorzugt jedoch mehrere Führungsrille(n) umfassen. Zudem kann ein Führungstisch auch gegebenenfalls zum Beispiel auch einen Beleuchtungstisch beziehungsweise einen Tisch mit einer lichtdurchlässigen Oberfläche und bevorzugt mindestens einer darunter angeordneten Lichtquelle aufweisen, um mindestens einen Polymerstrang vom Tisch ausbeziehungsweise von oben und von unten bevorzugt zum Beispiel gegebenenfalls auch gleichzeitig auszuleuchten und gegebenenfalls zu durchleuchten. Durch einen Führungstisch kann mindestens ein Polymerstrang zuverlässig aufgenommen und/oder geführt und insbesondere zuverlässig so geführt werden, dass zumindest ein Teil eines Polymerstrangs durch mindestens eine Aufnahmeeinheit optisch erfasst werden kann. Zudem kann ein Führungstisch, insbesondere wenn er zum Beispiel beim optischen Erfassen mindestens eines Polymerstrangs als Hintergrund verwendet werden kann, beim optischen Erfassen mindestens eines Polymerstrangs gegebenenfalls eine homogenere Beleuchtung/Ausleuchtung ermöglichen, um Probleme mit Reflexionen und/oder besonders hellen Punkten reduzieren. Dadurch kann das optische Erfassen eines Polymerstrangs vereinfacht werden. Des Weiteren kann mindestens ein Führungskanal mindestens einen Polymerstrang dabei aufnehmen und/oder führen. Ein Führungskanal kann dabei ein Element, wie insbesondere zum Beispiel ein Profil und/oder eine Rille insbesondere eine Führungsrille sein, welches so gestaltet und angeordnet sein kann, dass es mindestens einen Polymerstrang zumindest teilweise umschließen kann. Bevorzugt kann ein Führungskanal mindestens einen Polymerstrang dabei zum Beispiel von drei Seiten her zumindest teilweise umschließen. Ein Polymerstrang kann dabei insbesondere zudem zum Beispiel durch eine Rille beziehungsweise eine Führungsrille insbesondere eine Führungsrille einer Führungsrolle und/oder einer Führungswalze und/oder der gewellten/profilierten Oberfläche eines Führungstisches und/oder durch einen Führungskanal geführt werden. Eine Führungsrolle und/oder eine Führungswalze und/oder ein Führungstisch können dabei mindestens eine Rille aufweisen. Eine Rille kann dabei eine Führungsrille darstellen, welche einem Polymerstrang aufnehmen und/oder führen kann. Dadurch kann zum Beispiel die Ausleuchtung/Beleuchtung mindesten eines Polymerstrangs gegebenenfalls optimiert und/oder Reflexionen verhindert und/oder eine homogenere Beleuchtung/Ausleuchtung erreicht werden, um Probleme mit Reflexionen und/oder besonders hellen Punkten zu reduzieren und die optische Erfassung zu vereinfachen. Bevorzugt kann mindestens ein Polymerstrang bevorzugt zum Beispiel ohne Berührung durch eine Führungsrille und/oder durch einen Führungskanal geführt werden. Sofern ein transparentes und/oder transluzentes Polymermaterial verwendet wird, kann ein mindestens ein Polymerstrang bevorzugt zum Beispiel mit Berührung durch eine Führungsrille und/oder durch einen Führungskanal geführt werden. Dadurch kann insbesondere um Beispiel wenn mindestens ein transparenter und/oder transluzenter Polymerstrang kontrolliert/überwacht wird, die Ausleuchtung/Beleuchtung mindestens eines Polymerstrangs gegebenenfalls optimiert und/oder Reflexionen verhindert und/oder eine homogenere Beleuchtung/Ausleuchtung erreicht werden, um Probleme mit Reflexionen und/oder besonders hellen Punkten zu reduzieren und die optische Erfassung zu vereinfachen. Ein Führungsmittel beziehungsweise eine Führungsrolle und/oder eine Führungswalze und/oder ein Führungstisch und/oder eine Führungsrille kann dabei insbesondere zum Beispiel weiß sein, um gegebenenfalls beim optischen Erfassen als neutraler Hintergrund zu dienen und/oder gegebenenfalls eine homogenere Beleuchtung/Ausleuchtung zu erreichen, insbesondere, wenn mindestens ein Führungsmittel als Hintergrund beim optischen Erfassen mindestens eines Polymerstrangs verwendet werden kann. Dadurch kann das optische Erfassen mindestens eines Polymerstrangs vereinfacht werden. Ein Führungsmittel kann dabei insbesondere zum Beispiel aus Keramik sein. Dadurch kann ein Führungsmittel mechanisch sehr robust sein und/oder resistent gegenüber Verschleiß sein und/oder dank einer hellen und insbesondere zum Bespiel weißen Farbe gegebenenfalls als neutraler Hintergrund beim optischen Erfassen dienen.

In einer Ausführungsform der Vorrichtung zur optischen Qualitätskontrolle von extrudierten Polymersträngen, kann die Vorrichtung zum Beispiel einen oberen und einen unteren Teil umfassen, die auseinander gefahren werden können. Dadurch kann die Vorrichtung in einem auseinandergefahrenen Zustand gebracht werden, um mindestens einen Polymerstrang zwischen dem oberen und dem unteren Teil einzubringen und zu führen. Die Qualität des optischen Erscheinungsbilds eines eingebrachten Polymerstrangs kann dann bevorzugt zum Beispiel in einem zusammen gefahren Zustand kontrolliert werden, um zum Beispiel äußere Einflüsse gegebenenfalls zu reduzieren. Der obere und/oder der untere Teil der Vorrichtung kann/können dabei jeweils mindestens eine Aufnahmeeinheit und/oder mindestens eine Lichtquelle umfassen. Dadurch kann mindestens ein Polymerstrang in einem auseinander gefahrenen Zustand sehr bequem, zwischen dem oberen und dem unteren Teil eingebracht und geführt beziehungsweise eingefädelt werden. Darüber hinaus kann die Vorrichtung dadurch bequem gereinigt werden.

Des Weiteren kann eine Abtastung und insbesondere eine mechanische Abtastung mindestens eines Polymerstrangs und bevorzugt aller Potymerstränge durch mindestens ein oder mehrere geeignete(s) Abtastmittel, wie zum Beispiel einer aufliegenden Gummilippe, erfolgen, um gegebenenfalls eine Abweichung der Dicke beziehungsweise des Durchmessers eines Polymerstrang und insbesondere eine starke Abweichungen der Dicke beziehungsweise des Durchmessers festzustellen. Die Vorrichtung zur optischen Qualitätskontrolle von extrudierten Polymersträngen, kann dafür geeignete Abtastmittel umfassen. Die Abtastung kann dabei insbesondere zum Beispiel bereits vor der optischen Erfassung durch mindestens eine Aufnahmeeinheit erfolgen. Insbesondere kann die Abtastung zum Beispiel erfolgen, bevor mindestens ein Polymerstrang zwischen einem oberen und einem unteren Teil der Vorrichtung zur optischen Qualitätskontrolle von extrudierten Polymersträngen eingeführt wird, um dadurch gegebenenfalls eine Erhöhung der Dicke beziehungsweise des Durchmessers eines Polymerstrangs festzustellen, die zum Beispiel durch ein Verkleben zweier Polymerstränge auftreten kann. Zwei Polymerstränge können dabei insbesondere zum Beispiel zusammengeklebt werden, wenn ein Polymerstrang abgerissen ist, da ein Teil des abgerissenen Polymerstrangs auf einen anderen Polymerstrang gelegt werden kann, um von diesem mitgezogen werden zu können. Die beiden gerade aus dem Extruder gekommenen Polymerstränge können dabei miteinander verklebt werden und zu einer lokalen Erhöhung der Dicke beziehungsweise des Durchmessers eines Polymerstrangs führen. Damit der Polymerstrang trotz seiner lokal erhöhten Dicke beziehungsweise seines lokal erhöhten Durchmessers problemlos durch die Vorrichtung zur optischen Qualitätskontrolle von extrudierten Polymersträngen geführt werden kann, können ein oberer und ein unterer Teil der Vorrichtung zur optischen Qualitätskontrolle von extrudierten Polymersträngen zum Beispiel hydraulisch auseinander gefahren werden, um einen Teil eines Polymerstrangs mit einer erhöhten Dicke beziehungsweise einem erhöhten Durchmesser durch die Vorrichtung zu lassen, wenn eine Erhöhung der Dicke beziehungsweise des Durchmessers durch eine Abtastung im Vorfeld festgestellt wird. Danach können ein oberer und ein unterer Teil der Vorrichtung zur optischen Qualitätskontrolle von extrudierten Polymersträngen automatisch wieder zusammengefahren werden, um die optische Erfassung unter den besten Bedingungen fortzusetzen. Dadurch kann die optische Qualitätskontrolle von extrudierten Polymersträngen erfolgen, ohne den gewohnten Produktionsablauf zu modifizieren.

In einer Ausführungsform der Vorrichtung zur optischen Qualitätskontrolle von extrudierten Polymersträngen, kann die Vorrichtung zum Beispiel mindestens einen bevorzugt jedoch mehrere Schaltausgänge umfassen. Ein Schaltausgang kann dabei insbesondere zum Beispiel ein Mittel beziehungsweise ein Ausgang sein, welches/welcher verwendet werden kann, um mindestens ein Alarmsignal und/oder mindestens ein Steuersignal an mindestens eine weitere Vorrichtung der Produktionslinie auszusenden/auszugeben/zu übermitteln.

In einer Ausführungsform der Vorrichtung zur optischen Qualitätskontrolle von extrudierten Polymersträngen, kann die Vorrichtung zum Beispiel mindestens ein akustisches und/oder visuelles Warnmittel umfassen. Ein akustisches und/oder visuelles Warnmittel kann dabei zum Beispiel eine Sirene und/oder ein Bildschirm und/oder ein Lautsprecher und/oder eine Warnleuchte sein. Dadurch kann gegebenenfalls ein akustischer und/oder visueller Alarm erfolgen.

In einer Ausführungsform der Vorrichtung zur optischen Qualitätskontrolle von extrudierten Polymersträngen, kann die Vorrichtung zum Beispiel mindestens ein Mittel zum Speichern von Bilddaten umfassen. Dadurch können dadurch Bilddaten zunächst gespeichert werden, um sie zu einem späteren Zeitpunkt gegebenenfalls aufzurufen und/oder darzustellen und/oder zu analysieren und/oder zu verarbeiten. Darüber hinaus können Bilddaten gegebenenfalls zunächst gespeichert und erst später verarbeitet werden. Zudem können Bilddaten dadurch gegebenenfalls direkt in der Vorrichtung zur optischen Qualitätskontrolle von extrudierten Polymersträngen gespeichert werden.

In einer Ausführungsform der Vorrichtung zur optischen Qualitätskontrolle von extrudierten Polymersträngen, kann die Vorrichtung zum Beispiel mindestens ein Mittel zum Verarbeiten von Bilddaten umfassen. Bei einem Mittel zum Verarbeiten von Bilddaten kann es sich zum Beispiel um einen Mikroprozessor und/oder einen Mikrocomputer handeln, der es ermöglicht, für mindestens einen Pixel gewonnene Billdaten zu verarbeiten, um ein erfindungsgemäßes Verfahren zur optischen Qualitätskontrolle von extrudierten Polymersträngen mit allen seinen beschriebenen Merkmalen umzusetzen. Dabei können die Billdaten in jeder im erfindungsgemäßen Verfahren zur optischen Qualitätskontrolle von extrudierten Polymerstränge vorgesehenen Art und Weise verwendet/manipuliert und/oder verarbeitet und/oder insbesondere zum Beispiel miteinander und/oder mit mindestens einem Sollwert verglichen werden. Dabei kann mindestens ein Mittel zum Verarbeiten von Bilddaten insbesondere zum Beispiel dazu verwendet werden, mindestens für einen Pixel gewonnene Bilddaten und insbesondere zum Beispiel Farbwerte darzustellen und/oder mit einem Sollwert zu vergleichen und/oder einen mindestens Kontrastwert zu errechnen und/oder mindestens einen Bereich und/oder Pixelgruppe auszuwählen und/oder eine Anzahl von Pixeln zu messen und/oder auch mindestens ein Alarmsignal und/oder mindestens Steuersignal zu generieren. Alternativ kann jedoch auch ein zusätzliches unabhängiges Mittel zum Generieren auch mindestens ein Alarmsignals und/oder mindestens Steuersignals vorgesehen sein. Dadurch kann die Vorrichtung zur optischen Qualitätskontrolle von extrudierten Polymersträngen ein erfindungsgemäßes Verfahren zur optischen Qualitätskontrolle von extrudierten Polymersträngen mit allen seinen beschriebenen Merkmalen umsetzen beziehungsweise in einem solchen Verfahren verwendet werden. Zudem können Bilddaten dadurch gegebenenfalls direkt in der Vorrichtung zur optischen Qualitätskontrolle von extrudierten Polymersträngen verarbeitet werden.

In einer Ausführungsform der Vorrichtung zur optischen Qualitätskontrolle von extrudierten Polymersträngen, kann die Vorrichtung zum Beispiel mindestens ein Kontrollterminal umfassen. Das Kontrollterminal kann dabei mindestens eine Anzeigeeinheit wie zum Beispiel einen Bildschirm und/oder Eingabemittel, zum Beispiel eine Tastatur und/oder einen Lautsprecher umfassen. Dadurch kann die Vorrichtung zur optischen Qualitätskontrolle von extrudierten Polymersträngen ein erfindungsgemäßes Verfahren zur optischen Qualitätskontrolle von extrudierten Polymersträngen mit allen seinen beschriebenen Merkmalen umsetzen beziehungsweise in einem solchen Verfahren verwendet werden. Dadurch können zum Beispiel Bilddaten gegebenenfalls am Kontrollterminal dargestellt und/oder Sollwerte eingegeben/ausgewählt/vorgegeben werden.

In einer Ausführungsform der Vorrichtung zur optischen Qualitätskontrolle von extrudierten Polymersträngen, kann die Vorrichtung zum Beispiel mindestens einen und bevorzugt mehrere Verbindungsausgänge umfassen. Ein Verbindungsausgang kann dabei zum Beispiel verwendet werden, um Bilddaten zum Beispiel an einen externen Bildschirm und/oder an ein externes Kontrollterminal zu übermitteln und/oder um einen externen Kontrollterminal gemachte Eingaben an die Vorrichtung zur optischen Qualitätskontrolle von extrudierten Polymersträngen zu übermitteln.

Schließlich kann die Erfindung zum Beispiel auch die Verwendung einer Vorrichtung zur optischen Qualitätskontrolle von extrudierten Polymersträngen gegebenenfalls mit all ihren beschriebenen Merkmalen zum Durchführen eines Verfahren zur optischen Qualitätskontrolle von extrudierten Polymersträngen gegebenenfalls mit allen seinen beschriebenen Merkmalen betreffen.

### Zeichnungen:

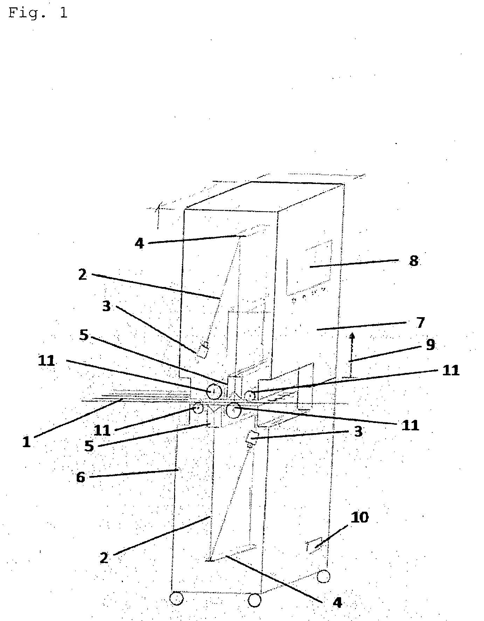

Figur 1 stellt eine erfindungsgemäße Vorrichtung zur optischen Qualitätskontrolle von extrudierten Polymersträngen dar, die zur Herstellung von Polymergranulat verwendet werden können, welche zwei Zeilenkameras, als Aufnahmeeinheiten (3), zwei Lichtquellen (5) mit Leuchtmitteln und vier Führungswalzen (11) umfasst. Die Lichtquellen (5) sind dabei zweiteilig ausgeführt und/oder weisen eine Öffnung auf. Des Weiteren sind die Lichtquellen (5) mit Reflektoren so gestaltet, dass ein Maximum an Licht auf die Polymerstränge (1) gerichtet wird. Die zwei Aufnahmeeinheiten (3) und die zwei Lichtquellen (5) sind so angeordnet, dass die Polymerstränge (1) von je einer Aufnahmeeinheit (3) und je einer Lichtquelle (5) von oben und von je einer weiteren Aufnahmeeinheit (3) und je einer weiteren Lichtquelle (5) von unten optisch erfasst und beleuchtet werden können. Dadurch können Farbabweichungen und/oder Einschlüsse und/oder Verfärbungen gegebenenfalls besser entdeckt werden. Die Polymerstränge (1) können durch die zwei Aufnahmeeinheiten (3) von oben und von unten optisch erfasst werden.

Die Vorrichtung zur optischen Qualitätskontrolle von extrudierten Polymersträngen, umfasst zudem zwei Spiegel (4), welche die Lichtstrahlen (2) umlenken, und es ermöglichen, dass die Aufnahmeeinheiten beziehungsweise die Zeilenkameras (3) trotz ihrer Anordnung zumindest einen Teil der Polymerstränge (1) durch eine Öffnung in den Lichtquellen (5) und/oder zwischen den zwei Teilen der Lichtquellen (5) optisch erfassen können.

Die erfindungsgemäße Vorrichtung zur optischen Qualitätskontrolle von extrudierten Polymersträngen, die zur Herstellung von Polymergranulat verwendet werden können, umfasst Anschlüsse (10), wie Verbindungsausgänge zum Übertragen von Bilddaten und/oder von Eingaben, Anschlüsse für Druckluft zur Kühlung der Lichtquellen und Schaltausgänge zum Aussenden/Ausgeben/Übermitteln mindestens eines Steuersignals und/oder mindestens eines Alarmsignals.

Die Vorrichtung zur optischen Qualitätskontrolle von extrudierten Polymersträngen, umfasst zudem einen oberen Teil (7) und einen unteren Teil (6). Diese Teile (6,7) können gemäß Richtung (9) auseinander gefahren werden, um mindestens einen Polymerstrang zwischen dem oberen und dem unteren Teil einzubringen und zu führen und/oder um die Vorrichtung zu reinigen und/oder einen Polymerstrang mit erhöten Dicke durchzulassen.

Die Vorrichtung zur optischen Qualitätskontrolle von extrudierten Polymersträngen, umfasst zudem ein Kontrollterminal (8). Das Kontrollterminal kann dabei mindestens eine Anzeigeeinheit wie zum Beispiel einen Bildschirm und/oder Eingabemittel wie zum Beispiel eine Tastatur umfassen. Dadurch können zum Beispiel Bilddaten gegebenenfalls am Kontrollterminal dargestellt und/oder Bereiche ausgewählt und/oder Sollwerte und/oder Grenzwerte eingegeben/ausgewählt/vorgegeben werden. Zudem können der Bildschirm und gegebenenfalls ein Lautsprecher des Kontrollterminals auch ein akustisches und/oder visuelles Warnmittel darstellen.

Jede der zwei Lichtquellen (5) und der zwei Aufnahmeeinheiten (3) ist jeweils gegenüber einer Führungswalzen (11) angeordnet. Die Führungswalzen (11) nehmen dabei die Polymersträngen (1) auf und führen dabei die Polymerstränge (1) bevorzugt so durch die erfindungsgemäße Vorrichtung zur optischen Qualitätskontrolle von extrudierten Polymersträngen, dass mindestens ein Teil jedes Polymerstrangs optisch erfasst werden kann, um das optische Erscheinungsbild jedes Polymerstrangs zu kontrollieren. Die zwei Lichtquellen (5) und die zwei Aufnahmeeinheiten (3) sind dabei so angeordnet, dass die Polymerstränge (1) jeweils zwischen jede der Lichtquellen (5) beziehungsweise jede der Aufnahmeeinheiten (3) und jede der Führungswalzen (11) geführt werden, wobei eine Aufnahmeeinheit (3) und eine Lichtquelle (5) die Polymerstränge (1) von oben mit einer Führungswalze (11) als Hintergrund optisch erfasst und/oder beleuchtet und eine weitere Aufnahmeeinheit (3) und eine weitere Lichtquelle (5) den Polymerstrang (1) von unten ebenfalls mit einer Führungswalze (11) als Hintergrund optisch erfasst und/oder beleuchtet. Dazu ist eine Aufnahmeeinheit (3) und eine Lichtquelle(5) in einem oberen Teil (7) einer erfindungsgemäßen Vorrichtung zur optischen Qualitätskontrolle von extrudierten Polymersträngen und eine Aufnahmeeinheit (3) und eine Lichtquelle (5) in einem unteren Teil (6) einer erfindungsgemäßen Vorrichtung zur optischen Qualitätskontrolle von extrudierten Polymersträngen vorgesehen. Dadurch können sowohl die Oberseite als auch die Unterseite mindestens eines Polymerstrangs mit einem neutralen Hintergrund und/oder einer optimierten Beleuchtung optisch erfasst werden, um die Qualität des optischen Erscheinungsbilds sowohl der Oberseite als auch der Unterseite mindestens eines Polymerstrangs zu kontrollieren.

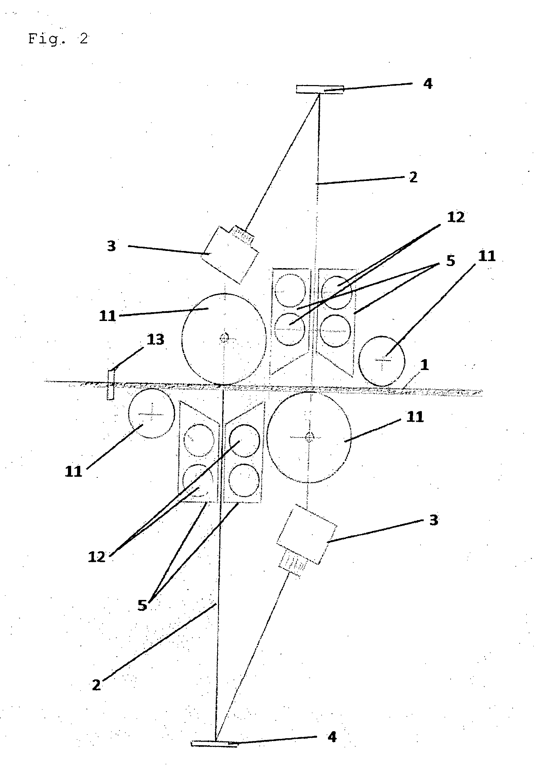

Figur 2 stellt eine Detailansicht einer möglichen Ausführungsform des Innenlebens einer erfindungsgemäßen Vorrichtung zur optischen Qualitätskontrolle von extrudierten Polymersträngen dar, die zur Herstellung von Polymergranulat verwendet werden können.

Die dargestellte Ausführungsform des Innenlebens einer erfindungsgemäßen Vorrichtung zur optischen Qualitätskontrolle von extrudierten Polymersträngen umfasst zwei Zeilenkameras als Aufnahmeeinheiten (3), zwei Lichtquellen (5) mit Leuchtmitteln (12) und vier Führungswalzen (11) und einen Führungskamm (13). Die Lichtquellen (5) sind dabei zweiteilig ausgeführt und/oder weisen eine Öffnung auf. Des Weiteren sind die Lichtquellen (5) mit Reflektoren so gestaltet, dass ein Maximum an Licht auf die Polymerstränge (1) gerichtet wird. Darüber hinaus weisen die Lichtquellen als Leuchtmittel (12) je vier Leuchtröhren beziehungsweise Neonröhren auf.

Ein Führungskamm (13) ist dabei ein kammartiges Teil, welches dazu verwendet werden kann, einzelne Polymersträngen vordem optischen Erfassen durch mindestens eine Aufnahmeeinheit mechanisch voneinander zu trennen (die Polymerstränge werden dabei von links nach rechts durch die Vorrichtung geführt). Dadurch kann die optische Erfassung der einzelnen Polymerstränge vereinfacht werden

Die zwei Aufnahmeeinheiten (3) und die zwei Lichtquellen (5) sind so angeordnet, dass die Polymerstränge (1) von je einer Aufnahmeeinheit (3) und je einer Lichtquelle (5) von oben und von je einer weiteren Aufnahmeeinheit (3) und je einer weiteren Lichtquelle (5) von unten optisch erfasst und beleuchtet werden können. Dadurch können Farbabweichungen und/oder Einschlüsse und/oder Verfärbungen gegebenenfalls besser entdeckt werden. Die Polymerstränge (1) können durch die zwei Aufnahmeeinheiten (3) von oben und von unten optisch erfasst werden.

Die Vorrichtung zur optischen Qualitätskontrolle von extrudierten Polymersträngen, umfasst zudem zwei Spiegel (4), welche die Lichtstrahlen (2) umlenken, und es ermöglichen, dass die Aufnahmeeinheiten (3) beziehungsweise die Zeilenkameras trotz ihrer Anordnung zumindest einen Teil der Polymerstränge (1) durch eine Öffnung in den Lichtquellen (5) und/oder zwischen den zwei Teilen der Lichtquellen (5) optisch erfassen können. Die Aufnahmeeinheiten (3) beziehungsweise die Zeilenkameras sind dabei so angeordnet, dass sie nicht direkt mindestens einen Teil der Polymerstränge (1) optisch erfassen können, sondern dass mindestens einen Teil der Polymerstränge (1) indirekt über jeweils einen Spiegel (4) optisch erfasst wird.

Jede der zwei Lichtquellen (5) und der zwei Aufnahmeeinheiten (3) ist jeweils gegenüber einer Führungswalze (11) angeordnet. Die Führungswalzen (11) nehmen die Polymerstränge (1) auf und führen dabei die Polymerstränge (1) bevorzugt so durch die erfindungsgemäße Vorrichtung zur optischen Qualitätskontrolle von extrudierten Polymersträngen, dass mindestens ein Teil jedes Polymerstrangs optisch erfasst werden kann, um das optische Erscheinungsbild jedes Polymerstrangs zu kontrollieren. Die zwei Lichtquellen (5) und die zwei Aufnahmeeinheiten (3) sind dabei so angeordnet, dass die Polymerstränge (1) jeweils zwischen jede der Lichtquellen (5) beziehungsweise jede der Aufnahmeeinheiten (3) und jede der Führungswalzen (11) geführt werden, wobei eine Aufnahmeeinheit (3) und eine Lichtquelle (5) die Polymerstränge (1) Von oben mit einer Führungswalze (11) als Hintergrund optisch erfasst und/oder beleuchtet und eine weitere Aufnahmeeinheit (3) und eine weitere Lichtquelle (5) den Polymerstrang (1) von unten ebenfalls mit einer Führungswalze (11) als Hintergrund optisch erfasst und/oder beleuchtet. Dazu ist eine Aufnahmeeinheit (3) und eine Lichtquelle(5) in einem oberen Teil (7) einer erfindungsgemäßen Vorrichtung zur optischen Qualitätskontrolle von extrudierten Polymersträngen und eine Aufnahmeeinheit (3) und eine Lichtquelle (5) in einem unteren Teil (6) einer erfindungsgemäßen Vorrichtung zur optischen Qualitätskontrolle von extrudierten Polymersträngen vorgesehen. Dadurch können sowohl die Oberseite als auch die Unterseite mindestens eines Polymerstrangs mit einem neutralen Hintergrund und/oder einer optimierten Beleuchtung optisch erfasst werden, um die Qualität des optischen Erscheinungsbilds sowohl der Oberseite als auch der Unterseite mindestens eines Polymerstrangs zu kontrollieren.

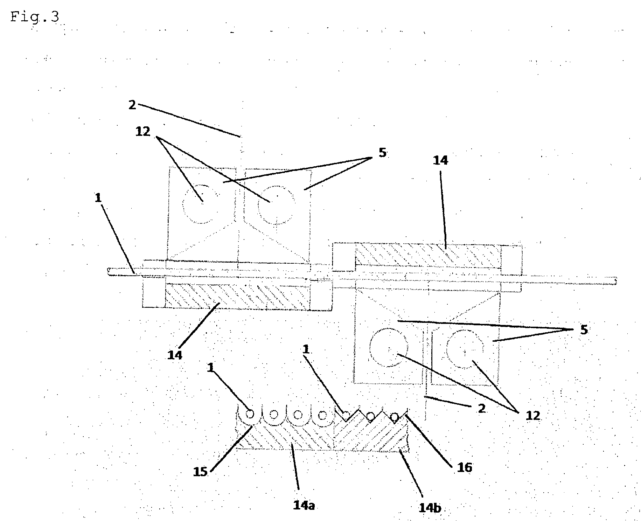

Figur 3 stellt eine Detailansicht einer alternativen Ausführungsform des Innenlebens einer erfindungsgemäße Vorrichtung zur optischen Qualitätskontrolle von extrudierten Polymersträngen dar, die zur Herstellung von Polymergranulat verwendet werden können.

Die dargestellte Ausführungsform des Innenlebens einer erfindungsgemäßen Vorrichtung zur optischen Qualitätskontrolle von extrudierten Polymersträngen umfasst zwei Zeilenkameras als Aufnahmeeinheiten (3, nicht dargestellt), zwei Lichtquellen (5) mit Leuchtmitteln (12) und zwei profilierte Führungstische (14). Die Lichtquellen (5) sind dabei zweiteilig ausgeführt und/oder weisen eine Öffnung auf. Des Weiteren sind die Lichtquellen (5) mit Reflektoren so gestaltet, dass ein Maximum an Licht auf die Polymerstränge (1) gerichtet wird. Darüber hinaus weisen die Lichtquellen als Leuchtmittel (12) je vier Leuchtröhren beziehungsweise Neonröhren auf.

Die zwei Aufnahmeeinheiten (3, nicht dargestellt)und die zwei Lichtquellen (5) sind so angeordnet, dass die Polymerstränge (1) von je einer Aufnahmeeinheit (3, nicht dargestellt) und je einer Lichtquelle (5) von oben und von je einer weiteren Aufnahmeeinheit (3, nicht dargestellt) und je einer weiteren Lichtquelle (5) von unten optisch erfasst und beleuchtet werden können. Dadurch können Farbabweichungen und/oder Einschlüsse und/oder Verfärbungen gegebenenfalls besser entdeckt werden. Die Polymerstränge (1) können durch die zwei Aufnahmeeinheiten (3, nicht dargestellt) von oben und von unten optisch erfasst werden. Zudem können die Polymerstränge (1) durch die zwei Lichtquellen (5) von oben und von unten beleuchtet werden.

Des Weiteren werden die Lichtstrahlen (2) dargestellt, welche durch Spiegel (4, nicht dargestellt) umgelenkt werden, damit die Aufnahmeeinheiten (3, nicht dargestellt) beziehungsweise die Zeilenkameras trotz ihrer Anordnung zumindest einen Teil der Polymerstränge (1) durch eine Öffnung in den Lichtquellen (5) und/oder zwischen den zwei Teilen der Lichtquellen (5) optisch erfassen können. Die Aufnahmeeinheiten (3, nicht dargestellt) beziehungsweise die Zeilenkameras sind dabei so angeordnet, dass sie nicht direkt mindestens einen Teil der Polymerstränge (1) optisch erfassen können, sondern dass mindestens ein Teil der Polymerstränge (1) indirekt über jeweils einen Spiegel (4, nicht dargestellt) optisch erfasst wird.

Die profilierten Führungstisch (14) weisen dabei Führungsrillen auf, welche die Polymerstränge (1) aufnehmen können und durch welche die Polymerstränge (1) geführt werden. Dadurch kann eine homogenere Beleuchtung/Ausleuchtung der Polymerstränge erreicht werden, um Probleme mit Reflexionen und/oder besonders hellen Punkten zu reduzieren und die optische Erfassung zu vereinfachen.

Jede der zwei Lichtquellen (5) und der zwei Aufnahmeeinheiten (3, nicht dargestellt) ist jeweils gegenüber einem Führungstisch (14) angeordnet. Die Führungstische (14) nehmen die Polymerstränge (1) auf und führen dabei die Polymerstränge (1) bevorzugt so durch die erfindungsgemäße Vorrichtung zur optischen Qualitätskontrolle von extrudierten Polymersträngen, dass mindestens ein Teil jedes Polymerstrangs optisch erfasst werden kann, um das optische Erscheinungsbild jedes Polymerstrangs zu kontrollieren. Die zwei Lichtquellen (5) und die zwei Aufnahmeeinheiten (3, nicht dargestellt) sind dabei so angeordnet, dass die Polymerstränge (1) jeweils zwischen jede der Lichtquellen (5) beziehungsweise jede der Aufnahmeeinheiten (3, nicht dargestellt) und jedem der Führungstische (14) geführt werden, wobei eine Aufnahmeeinheit (3, nicht dargestellt) und eine Lichtquelle (5) die Polymerstränge (1) von oben mit einem Führungstisch (14) als Hintergrund optisch erfasst und/oder beleuchtet und eine weitere Aufnahmeeinheit (3, nicht dargestellt) und eine weitere Lichtquelle (5) den Polymerstrang (1) von unten ebenfalls mit einem Führungstisch (14) als Hintergrund optisch erfasst und/oder beleuchtet. Dazu ist eine Aufnahmeeinheit (3, nicht dargestellt) und eine Lichtquelle(5) in einem oberen Teil (7, nicht dargestellt) einer erfindungsgemäßen Vorrichtung zur optischen Qualitätskontrolle von extrudierten Polymersträngen und eine Aufnahmeeinheit (3, nicht dargestellt) und eine Lichtquelle (5) in einem unteren Teil (6, nicht dargestellt) einer erfindungsgemäßen Vorrichtung zur optischen Qualitätskontrolle von extrudierten Polymersträngen vorgesehen. Dadurch können sowohl die Oberseite als auch die Unterseite mindestens eines Polymerstrangs mit einem neutralen Hintergrund und/oder einer optimierten Beleuchtung optisch erfasst werden, um die Qualität des optischen Erscheinungsbilds sowohl der Oberseite als auch der Unterseite mindestens eines Polymerstrangs zu kontrollierten.

Zudem werden beispielhaft zwei verschiedenen Ausführungen einer Profilierung (15 und 16) der Führungstische (14) in den Darstellungen (14 a und 14 b) von zwei beispielhaften Querschnitten eines Führungstischs (14) gezeigt. Dabei können die Polymerstränge (1) mit (14b) oder ohne (14b) Berührung mit dem Profil /und/oder dem Führungstisch (14) durch die Führungsrillen der Führungstische (14) geführt werden. Die Darstellung eines beispielhaften Querschnitts eines Führungstischs (14 a) zeigt dabei eine halbrunde Profilierung (15) mit halbrunden Führungsrillen. Die Darstellung eines beispielhaften Querschnitts eines Führungstischs (14 b) zeigt dabei eine sägezahnartige Profilierung (16) mit dreieckigen Führungsrillen. Dadurch kann eine homogenere Beleuchtung/Ausleuchtung der Polymerstränge erreicht werden, um Probleme mit Reflexionen und/oder besonders hellen Punkten zu reduzieren und die optische Erfassung zu vereinfachen.

Darüber hinaus können Polymerstränge insbesondere zum Beispiel bei transparenten und/oder transluzenten Polymersträngen mit Berührung (14b) mit dem Profil und/oder dem Führungstisch (14) durch die Führungsrillen der Führungstisch (14) geführt werden. Dadurch kann insbesondere zum Beispiel bei transparenten und/oder transluzenten Polymersträngen eine homogenere Beleuchtung/Ausleuchtung der Polymerstränge erreicht werden, um Probleme mit Reflexionen und/oder besonders hellen Punkten zu reduzieren und die optische Erfassung zu vereinfachen.

## Patentansprüche

1. Verfahren zur optischen Qualitätskontrolle von extrudierten Polymersträngen, die zur Herstellung von Polymergranulat verwendet werden können, wobei zumindest ein Teil mindestens eines Polymerstrangs (1), der durch mindestens ein Führungsmittel geführt wird, optisch kontinuierlich durch mindestens eine Aufnahmeeinheit (3) erfasst wird, wobei Bilddaten für mindestens ein Pixel gewonnen und mit mindestens einem Sollwert verglichen werden, **dadurch gekennzeichnet, dass** der Polymerstrangs (1) zwischen der Lichtquelle (5) und dem Führungsmittel (11,13,14) geführt wird, so dass das auf der gegenüberliegenden Seite des Polymerstrangs (1) angeordnete Führungsmittel (11,13,14) als Hintergrund beim optischen Erfassen dient.

2. Verfahren zur optischen Qualitätskontrolle von extrudierten Polymersträngen, die zur Herstellung von Polymergranulat verwendet werden können, nach Anspruch 1
**dadurch gekennzeichnet,**
**dass** Bilddaten für mindestens ein Pixel gewonnen werden und ferner mindestens ein Farbwert für diese Pixel mit mindestens einem Sollwert verglichen wird.

3. Verfahren zur optischen Qualitätskontrolle von extrudierten Polymersträngen, die zur Herstellung von Polymergranulat verwendet werden können, nach einem oder mehreren der vorangegangen Ansprüche
**dadurch gekennzeichnet,**
**dass** mindestens ein Sollwert für den Farbwert durch Eingabe eines Wertes und/oder durch Auswahl eines Wertes anhand von mehreren vorgegebenen Farbwerten erfolgt.

4. Verfahren zur optischen Qualitätskontrolle von extrudierten Polymersträngen, die zur Herstellung von Polymergranulat verwendet werden können, nach einem oder mehreren der vorangegangen Ansprüche
**dadurch gekennzeichnet,**
**dass** Pixel, deren Farbwerte dem Sollwert entsprechen und/oder ausreichend ähneln und/oder dass Pixel, deren Farbwerte dem Sollwert nicht entsprechen und/oder ausreichend ähneln, gezählt werden.

5. Verfahren zur optischen Qualitätskontrolle von extrudierten Polymersträngen, die zur Herstellung von Polymergranulat verwendet werden können, nach einem oder mehreren der vorangegangen Ansprüche
**dadurch gekennzeichnet,**
**dass** bei mehreren Sollwerten für jeden Sollwert Pixel, deren Farbwerte dem Sollwert entsprechen und/oder ausreichend ähneln und/oder dass Pixel, deren Farbwerte dem Sollwert nicht entsprechen und/oder ausreichend ähneln, gezählt werden.

6. Verfahren zur optischen Qualitätskontrolle von extrudierten Polymersträngen, die zur Herstellung von Polymergranulat verwendet werden können, nach einem oder mehreren der vorangegangen Ansprüche
**dadurch gekennzeichnet,**
**dass** mindestens ein bevorzugt jedoch mindestens zwei Bereiche der Bilddaten ausgewählt wird/werden, wobei innerhalb jedes ausgewählten Bereichs Pixel, deren Farbwerte dem Sollwert entsprechen und/oder ausreichend ähneln und/oder dass Pixel, deren Farbwerte dem Sollwert nicht entsprechen und/oder ausreichend ähneln, gezählt werden.

7. Verfahren zur optischen Qualitätskontrolle von extrudierten Polymersträngen, die zur Herstellung von Polymergranulat verwendet werden können, nach einem oder mehreren der vorangegangen Ansprüche
**dadurch gekennzeichnet,**
**dass** mindestens ein Farbwert mit mindestens einem Sollwert für den Farbwert verglichen wird, um mindestens einen Kontrastwert zu ermitteln/zu errechnen.

8. Verfahren zur optischen Qualitätskontrolle von extrudierten Polymersträngen, die zur Herstellung von Polymergranulat verwendet werden können, nach einem oder mehreren der vorangegangen Ansprüche
**dadurch gekennzeichnet,**
**dass**, sofern die Anzahl der Pixel, deren Farbwerte einem Sollwert entsprechen und/oder ausreichend ähneln, über und/oder unter einem bestimmten frei wählbaren Grenzwert liegt und/oder für mindestens einen ausgewählten Bereich über und/oder unter einem bestimmten frei wählbaren Grenzwert liegt mindestens ein Alarmsignal und/oder mindestens ein Steuersignal generiert und/oder ausgesendet wird
und/oder dass, sofern mindestens ein Kontrastwert und/oder mindestens eine frei wählbare Anzahl von Kontrastwerten und/oder mindestens eine frei wählbare Anzahl von Kontrastwerten innerhalb eines frei wählbaren Zeitintervalls ermittelt werden, der/die über einem Sollwert liegt/liegen und/oder für mindestens einen ausgewählten Bereich über einem Sollwert liegt/liegen, mindestens ein Alarmsignal und/oder mindestens ein Steuersignal generiert und/oder ausgesendet wird
und/oder dass, sofern die Anzahl der Pixel, deren Farbwerte nicht mindestens einem Sollwert entsprechen und/oder ausreichend ähneln, und/oder die Anzahl der Pixel, deren Farbwerte nicht mindestens einem Sollwert entsprechen und/oder ausreichend ähneln und die in einem frei wählbaren Zeitintervall festgestellt werden, über einem frei wählbaren Grenzwert liegt/liegen und/oder für mindestens einen ausgewählten Bereich über einem frei wählbaren Grenzwert liegt/liegen, kann ein mindestens ein Alarmsignal und/oder mindestens ein Steuersignal generiert und/oder ausgesendet werden.

9. Vorrichtung zur optischen Qualitätskontrolle von extrudierten Polymersträngen, die zur Herstellung von Polymergranulat verwendet werden können, wobei die Vorrichtung mindestens eine Aufnahmeeinheit (3), mindestens eine Lichtquelle (5), mindestens ein Führungsmittel (11,13,14) und mindestens ein Mittel zum Verarbeiten von Bilddaten, welches mindestens für einen Pixel gewonnene Farbwerte mit einem Sollwert vergleichen kann, umfasst, **dadurch gekennzeichnet, dass** der Polymerstrang (1) zwischen der Lichtquelle (5) und dem Führungsmittel (11,13,14) geführt wird, so dass das auf der gegenüberliegenden Seite des Polymerstrangs (1) angeordnete Führungsmittel (11,13,14) als Hintergrund beim optischen Erfassen dient..

10. Vorrichtung zur optischen Qualitätskontrolle von extrudierten Polymersträngen, die zur Herstellung von Polymergranulat verwendet werden können, nach Anspruch 9,
**dadurch gekennzeichnet,**
**dass** die Vorrichtung mindestens zwei Aufnahmeeinheiten (3) und/oder mindestens zwei Lichtquellen (5) umfasst.

11. Vorrichtung zur optischen Qualitätskontrolle von extrudierten Polymersträngen, die zur Herstellung von Polymergranulat verwendet werden können, nach Anspruch 10,
**dadurch gekennzeichnet,**
**dass** jede der mindesten zwei Aufnahmeeinheiten (3) und/oder der mindestens zwei Lichtquellen (5) jeweils gegenüber mindesten einem Führungsmittel (11,13,14) angeordnet ist.

12. Vorrichtung zur optischen Qualitätskontrolle von extrudierten Polymersträngen, die zur Herstellung von Polymergranulat verwendet werden können, nach einem oder mehreren der vorangegangenen Ansprüche ,
**dadurch gekennzeichnet,**
**dass** eine Aufnahmeeinheit (3) mindestens eine Zeilen- und/oder mindestens eine Flächenkamera und/oder mindestens eine Farbkamera und/oder mindestens eine Schwarzweißkamera ist.

13. Vorrichtung zur optischen Qualitätskontrolle von extrudierten Polymersträngen, die zur Herstellung von Polymergranulat verwendet werden können, nach einem oder mehreren der vorangegangenen Ansprüche ,
**dadurch gekennzeichnet,**
**dass** das Führungsmittel mindestens eine Führungsrolle und/oder mindestens eine Führungswalze (11) und/oder mindestens einen Führungstisch (14) beziehungsweise einen profilierten Führungstisch und/oder mindestens eine Führungsrille und/oder mindestens ein Führungsprofil und/oder mindestens einen Führungskamm umfasst.

14. Verwendung einer Vorrichtung zur optischen Qualitätskontrolle von extrudierten Polymersträngen, die zur Herstellung von Polymergranulat verwendet werden können, nach einem oder mehreren der Ansprüche 9 bis 13 zum Durchführen eines Verfahrens zur optischen Qualitätskontrolle von extrudierten Polymersträngen (1), die zur Herstellung von Polymergranulat verwendet werden können, nach einem oder mehreren der Ansprüche 1 bis 8.

## Claims

1. Method for optical quality control of extruded polymer strands, which can be used to produce polymer granules,
wherein at least a part of at least one polymer strand (1), which is guided by means of at least one guide means, is continuously captured optically by means of at least one recording unit (3), wherein image data for at least one pixel are obtained and are compared to at least one nominal value, **characterized in that** the polymer strand (1) is guided between the light source (5) and the guide means (11, 13, 14), so that the guide means (11, 13, 14), which is arranged on the opposite side of the polymer strand (1), serves as background during the optical capturing.

2. Method for optical quality control of extruded polymer strands, which can be used to produce polymer granules, according to claim 1, **characterized in that** image data for at least one pixel are obtained and at least one color value for these pixels is furthermore compared to at least one nominal value.

3. Method for optical quality control of extruded polymer strands, which can be used to produce polymer granules, according to any one or a plurality of the preceding claims, **characterized in that** at least one nominal value for the color value occurs by entering a value and/or by selecting a value based on a plurality of predefined color values.

4. Method for optical quality control of extruded polymer strands, which can be used to produce polymer granules, according to any one or a plurality of the preceding claims, **characterized in that** pixels, the color values of which correspond to and/or are sufficiently similar to the nominal value and/or that pixels, the color values of which do not correspond to and/or are sufficiently similar to the nominal value, are counted.

5. Method for optical quality control of extruded polymer strands, which can be used to produce polymer granules, according to any one or a plurality of the preceding claims, **characterized in that**, in the case of a plurality of nominal values, pixels, the color values of which correspond to and/or are sufficiently similar to the nominal value and/or that pixels, the color values of which do not correspond to and/or are sufficiently similar to the nominal value, are counted for each nominal value.

6. Method for optical quality control of extruded polymer strands, which can be used to produce polymer granules, according to any one or a plurality of the preceding claims, **characterized in that** at least one, but preferably at least two regions of the image data is/are selected, wherein pixels, the color values of which correspond to and/or are sufficiently similar to the nominal value and/or that pixels, the color values of which do not correspond to and/or are sufficiently similar to the nominal value, are counted within each selected region.

7. Method for optical quality control of extruded polymer strands, which can be used to produce polymer granules, according to any one or a plurality of the preceding claims, **characterized in that** at least one color value is compared to at least one nominal value for the color value so as to determine/calculate at least one contrast value.

8. Method for optical quality control of extruded polymer strands, which can be used to produce polymer granules, according to any one or a plurality of the preceding claims, **characterized in that** at least one alarm signal and/or at least one control signal is generated and/or sent, provided that the number of the pixels, the color values of which correspond to and/or are sufficiently similar to a nominal value, lies above and/or below a certain freely selectable threshold value and/or lies above and/or below a certain freely selectable threshold value for at least one selected region
and/or that at least one alarm signal and/or at last one control signal is generated and/or sent, provided that at least one contrast value and/or at least one freely selectable number of contrast values and/or at least one freely selectable number of contrast values are determined within a freely selectable time interval, which lies/lie above a nominal value and/or lies/lie above a nominal value for at least one selected region
and/or that at least one alarm signal and/or at least one control signal can be generated and/or sent, provided that the number of the pixels, the color values of which do not correspond to and/or are sufficiently similar to at least one nominal value and/or the number of the pixels, the color values of which do not correspond to and/or are at least sufficiently similar to at least one nominal value and which are determined in a freely selectable time interval, lies/lie above a freely selectable threshold value and/or lies/lie above a freely selectable threshold value for at least one selected region.

9. Device for optical quality control of extruded polymer strands, which can be used to produce polymer granules, wherein the device comprises at least one recording unit (3), at least one light source (5), at least one guide means (11, 13, 14) and at least one means for processing image data, which means can compare color values obtained at least for one pixel to a nominal value, **characterized in that** the polymer strand (1) is guided between the light source (5) and the guide means (11, 13, 14), so that the guide means (11, 13, 14) arranged on the opposite side of the polymer strand (1) serves as background during optical capturing.

10. Device for optical quality control of extruded polymer strands, which can be used to produce polymer granules, according to claim 9, **characterized in that** the device comprises at least two recording units (3) and/or at least two light sources (5).

11. Device for optical quality control of extruded polymer strands, which can be used to produce polymer granules, according to claim 10, **characterized in that** each of the at least two recording units (3) and/or of the at least two light sources (5) are in each case arranged opposite to at least one guide means (11, 13, 14).

12. Device for optical quality control of extruded polymer strands, which can be used to produce polymer granules, according to any one or a plurality of the preceding claims, **characterized in that** a recording unit (3) is at least one line-scan camera and/or at last one area-scan camera and/or at least one color camera and/or at least one black-and-white camera.

13. Device for optical quality control of extruded polymer strands, which can be used to produce polymer granules, according to any one or a plurality of the preceding claims, **characterized in that** the guide means comprises at least one guide pulley and/or at least one guide roller (11) and/or at least one guide table (14) or a profiled guide table, respectively, and/or at least one guide groove and/or at least one guide profile and/or at least one guide comb.

14. Use of a device for optical quality control of extruded polymer strands, which can be used to produce polymer granules, according to any one or a plurality of claims 9 to 13 for carrying out a method for optical quality control of extruded polymer strands (1), which can be used to produce polymer granules, according to any one or a plurality of claims 1 to 8.

## Revendications

1. Procédé destiné au contrôle de la qualité visuelle de fils polymère extrudés qui peuvent être employés pour la fabrication de granulat polymère, dans lequel au moins une partie d'au moins un fil polymère (1) qui est dirigé par au moins un moyen de guidage, est détectée visuellement en continu par au moins une unité d'enregistrement (3), dans lequel des données d'image sont extraites pour au moins un pixel et sont comparées à au moins une valeur de consigne, **caractérisé en ce que** le fil polymère (1) est dirigé entre la source lumineuse (5) et le moyen de guidage (11, 13, 14) de façon à ce que le moyen de guidage (11, 13, 14) disposé sur le côté opposé du fil polymère (1) serve de fond lors de la détection visuelle.

2. Procédé destiné au contrôle de la qualité visuelle de fils polymère extrudés qui peuvent être employés pour la fabrication de granulat polymère selon la revendication 1, **caractérisé en ce que** des données d'image sont extraites pour au moins un pixel et qu'en outre, au moins une valeur chromatique pour ce pixel est comparée à au moins une valeur de consigne.

3. Procédé destiné au contrôle de la qualité visuelle de fils polymère extrudés qui peuvent être employés pour la fabrication de granulat polymère selon la revendication 1 ou 2, **caractérisé en ce qu'**au moins une valeur de consigne pour la valeur chromatique est donnée en saisissant une valeur et/ou en sélectionnant une valeur à l'aide de plusieurs valeurs chromatiques prédéfinies.

4. Procédé destiné au contrôle de la qualité visuelle de fils polymère extrudés qui peuvent être employés pour la fabrication de granulat polymère selon l'une ou plusieurs des revendications précédentes, **caractérisé en ce que** des pixels, dont les valeurs chromatiques correspondent à la valeur de consigne et/ou lui ressemblent suffisamment et/ou que des pixels, dont les valeurs chromatiques ne correspondent pas à la valeur de consigne et/ou ne lui ressemblent pas suffisamment, sont comptés.

5. Procédé destiné au contrôle de la qualité visuelle de fils polymère extrudés qui peuvent être employés pour la fabrication de granulat polymère selon l'une ou plusieurs des revendications précédentes, **caractérisé en ce que** lorsqu'il y a plusieurs valeurs de consigne pour chaque valeur de consigne, des pixels, dont les valeurs chromatiques correspondent à la valeur de consigne et/ou lui ressemblent suffisamment et/ou des pixels, dont les valeurs chromatiques ne correspondent pas à la valeur de consigne et/ou ne lui ressemblent pas suffisamment, sont comptés.

6. Procédé destiné au contrôle de la qualité visuelle de fils polymère extrudés qui peuvent être employés pour la fabrication de granulat polymère selon l'une ou plusieurs des revendications précédentes, **caractérisé en ce qu'**au moins une zone, de préférence toutefois au moins deux zones des données d'image est/sont sélectionnée(s), dans lequel à l'intérieur de chaque zone sélectionnée, des pixels, dont les valeurs chromatiques correspondent à la valeur de consigne et/ou lui ressemblent suffisamment et/ou des pixels, dont les valeurs chromatiques ne correspondent pas à la valeur de consigne et/ou ne lui ressemblent pas suffisamment, sont comptés.

7. Procédé destiné au contrôle de la qualité visuelle de fils polymère extrudés qui peuvent être employés pour la fabrication de granulat polymère selon l'une ou plusieurs des revendications précédentes, **caractérisé en ce qu'**au moins une valeur chromatique est comparée à au moins une valeur de consigne pour la valeur chromatique, pour déterminer/calculer au moins une valeur de contraste.

8. Procédé destiné au contrôle de la qualité visuelle de fils polymère extrudés qui peuvent être employés pour la fabrication de granulat polymère selon l'une ou plusieurs des revendications précédentes, **caractérisé en ce que** dans la mesure où le nombre de pixels, dont les valeurs chromatiques correspondent à une valeur de consigne et/ou lui ressemblent suffisamment, est au-dessus et/ou en-dessous d'une valeur limite déterminée pouvant être choisie librement et/ou pour au moins une zone sélectionnée, est au-dessus et/ou en-dessous d'une valeur limite déterminée pouvant être choisie librement, au moins un signal d'alarme et/ou au moins un signal de commande est/sont généré(s) et/ou émis
et/ou que, dans la mesure où au moins une valeur de contraste, et/ou au moins un nombre pouvant être choisi librement de valeurs de contraste et/ou au moins un nombre pouvant être choisi librement de valeurs de contraste à l'intérieur d'un intervalle de temps pouvant être choisi librement est/sont déterminée(s), qui est/sont supérieure(s) à une valeur de consigne et/ou supérieure(s) à une valeur de consigne pour au moins une zone sélectionnée, au moins un signal d'alarme et/ou au moins un signal de commande est/sont généré(s) et/ou émis
et/ou que dans la mesure où le nombre de pixels, dont les valeurs chromatiques ne correspondent pas à au moins une valeur de consigne et/ou ne lui ressemblent pas suffisamment, et/ou le nombre de pixels, dont les valeurs chromatiques ne correspondent pas à au moins une valeur de consigne et/ou ne lui ressemblent pas suffisamment et sont déterminées dans un intervalle de temps pouvant être choisi librement, est au-dessus d'une valeur limite pouvant être choisie librement et/ou pour au moins une zone sélectionnée, est au-dessus d'une valeur limite pouvant être choisie librement, au moins un signal d'alarme et/ou au moins un signal de commande peu(ven)t être généré(s) et/ou émis.

9. Dispositif destiné au contrôle de la qualité visuelle de fils polymère extrudés qui peuvent être employés pour la fabrication de granulat polymère, dans lequel le dispositif comprend au moins une unité d'enregistrement (3), au moins une source lumineuse (5), au moins un moyen de guidage (11, 13, 14) et au moins un moyen pour traiter des données d'image qui peut comparer des valeurs chromatiques extraites pour au moins un pixel à une valeur de consigne
**caractérisé en ce que** le fil polymère (1) est dirigé entre la source lumineuse (5) et le moyen de guidage (11, 13, 14) de façon à ce que le moyen de guidage (11, 13, 14) disposé sur le côté opposé du fil polymère (1) serve de fond lors de la détection visuelle.

10. Dispositif destiné au contrôle de la qualité visuelle de fils polymère extrudés qui peuvent être employés pour la fabrication de granulat polymère selon la revendication 9, **caractérisé en ce que** le dispositif comprend au moins deux unités d'enregistrement (3) et/ou au moins deux sources lumineuses (5).

11. Dispositif destiné au contrôle de la qualité visuelle de fils polymère extrudés qui peuvent être employés pour la fabrication de granulat polymère selon la revendication 10, **caractérisé en ce que** chacune des au moins deux unités d'enregistrement (3) et/ou des au moins deux sources lumineuses (5) est disposée respectivement face à au moins un moyen de guidage (11, 13, 14).

12. Dispositif destiné au contrôle de la qualité visuelle de fils polymère extrudés qui peuvent être employés pour la fabrication de granulat polymère selon l'une ou plusieurs des revendications précédentes, **caractérisé en ce qu'**une unité d'enregistrement (3) est au moins une caméra linéaire et/ou au moins une caméra de surface et/ou au moins une caméra couleur et/ou au moins une caméra noir et blanc.

13. Dispositif destiné au contrôle de la qualité visuelle de fils polymère extrudés qui peuvent être employés pour la fabrication de granulat polymère selon l'une ou plusieurs des revendications précédentes, **caractérisé en ce que** le moyen de guidage comprend au moins un galet de guidage et/ou au moins un rouleau de guidage (11) et/ou au moins une table de guidage (14), respectivement une table de guidage profilée et/ou au moins une rainure de guidage et/ou au moins un profilé de guidage et/ou au moins un peigne de guidage.

14. Emploi d'un dispositif destiné au contrôle de la qualité visuelle de fils polymère extrudés qui peuvent être employés pour la fabrication de granulat polymère selon l'une ou plusieurs des revendications 9 à 13 pour exécuter un procédé destiné au contrôle de la qualité visuelle de fils polymère extrudés (1) qui peuvent être employés pour la fabrication de granulat polymère selon l'une ou plusieurs des revendications 1 à 8.
